(19) Europäisches Patentamt
European Patent Office
Office européen des brevets

(11) EP 2 855 580 B1

(12) EUROPÄISCHE PATENTSCHRIFT

(45) Veröffentlichungstag und Bekanntmachung des Hinweises auf die Patenterteilung:
**13.07.2016 Patentblatt 2016/28**

(21) Anmeldenummer: **13725627.7**

(22) Anmeldetag: **24.05.2013**

(51) Int Cl.:
***C08L 33/04*** *(2006.01)* ***C08L 61/24*** *(2006.01)*
***C08L 61/28*** *(2006.01)*

(86) Internationale Anmeldenummer:
**PCT/EP2013/060695**

(87) Internationale Veröffentlichungsnummer:
**WO 2013/178537 (05.12.2013 Gazette 2013/49)**

# (54) BINDEMITTEL

BINDING AGENT

LIANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.05.2012 EP 12170231**

(43) Veröffentlichungstag der Anmeldung:
**08.04.2015 Patentblatt 2015/15**

(73) Patentinhaber: **BASF SE**
**67056 Ludwigshafen am Rhein (DE)**

(72) Erfinder:
- **HENN, Rolf**
  **68723 Oftersheim (DE)**
- **JAHNS, Ekkehard**
  **69469 Weinheim (DE)**

(74) Vertreter: **BASF IP Association**
**BASF SE**
**ZRX-C6**
**67056 Ludwigshafen (DE)**

(56) Entgegenhaltungen:
**WO-A1-2008/150647 US-A- 2 187 383**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 855 580 B1

Printed by Jouve, 75001 PARIS (FR)

## Beschreibung

Gegenstand der vorliegenden Erfindung sind Bindemittel, welche ein Polymerisat A und Teilchen eines Formaldehydkondensationsharzes (Teilchen B) enthalten, wobei

a) das Polymerisat A eine Glasübergangstemperatur im Bereich ≥ -60 und ≤ 70 °C aufweist, und

b) die Teilchen B einen volumenmittleren Teilchendurchmesser $D_{90} \geq$ 1 und ≤ 100 μm, bestimmt nach der Methode der Fraunhofer-Beugung, aufweisen.

Die vorliegende Erfindung umfasst ferner die Verwendung der vorgenannten Bindemittel in den unterschiedlichsten Anwendungsgebieten sowie Beschichtungsformulierungen, welche Polymerisat A und Teilchen B enthalten.

Bindemittel, beispielsweise auf Basis von natürlichen Rohstoffen, wie Nitrocellulose, Celluloseester, wie beispielsweise Celluloseacetat oder Cellulosebutyrat, Kollophonium, Schellack, Leinöl und Holzöl und synthetischen Rohstoffen, wie Alkydharze, Chlorkautschuk, Polyvinylacetat, Polyvinylalkohol, Polyvinylbutyral, Acrylharze und Acrylatdispersionen, UV-härtende Harze, Melaminharze, gesättigte und ungesättigte Polyester, 1 K- und 2K-Polyurethane, Epoxyharze, Silikonharze, Asphalt, Bitumen, Wasserglas, Amid- und Aminoharze sind dem Fachmann geläufig (siehe hierzu beispielsweise "Unsere Zukunft, unser Lack", Kapitel 4.1, Seiten 24 bis 33, Wien, 4. Auflage, 2008, Berufsgruppe Lackindustrie) und werden insbesondere bei der Herstellung von Klebstoffen, Dichtmassen, Kunstharzputzen, Papierstreichmassen, Faservliesen, flexiblen Dachbeschichtungen und Anstrichmitteln eingesetzt. Die Bindemittel sind dabei entweder in organischen Lösungsmitteln oder in Wasser gelöst oder dispergiert oder können auch als sogenannte 100 %-Systeme ohne organische Lösungsmittel oder Wasser eingesetzt werden. Insbesondere dann, wenn die mit den bindemittelhaltigen Formulierungen behandelten Substrate, wie flexible Dachbeschichtungen oder mit Anstrichmitteln beschichtete Substrate mit Luft, Licht und Feuchtigkeit in Kontakt kommen, beispielsweise in Feuchträumen oder bei Außenanwendungen, kommt es nach einiger Zeit aufgrund von Pilz- und Algenbewuchs zu unschönen und daher unerwünschten Verfärbungen und Belägen.

Zur Vermeidung dieser unerwünschten Verfärbungen und Beläge werden daher den Beschichtungsformulierungen bzw. Anstrichmitteln unterschiedlichste biozid-, insbesondere fungizid- und algizidwirkende Formulierungsbestandteile zugemischt, welche dann die Algen- und Pilzbildung auf den flexiblen Dachbeschichtungen oder den beschichteten Substraten unterbinden oder zumindest reduzieren (siehe hierzu insbesondere US-A 5,304,567; M. Burghardt et al., "Biozide in Gebäudefassaden - ökotoxikologische Effekte, Auswaschungen und Belastungsabschätzung für Gewässer" in Umweltwissenschaften und Schadstoffforschung, Vol. 21, 1, 2009, Seiten 36 bis 47 sowie U. Schoknecht, "Auswaschbarkeit von Biozidwirkstoffen aus Fassadenbeschichtungen" in Biozide und funktionale Baustoffoberflächen, 8. Dahlberg-Kolloquium 2008, Fraunhofer-IRB Verlage, Seiten 110ff.).

Nachteilig an den im Stand der Technik genannten Beschichtungsformulierungen ist, dass sehr aufwendig herzustellende und daher sehr teure fungizide und/oder algizide Wirkstoffe (wie beispielsweise die Fungizide Octylisothiazolinon, Dichloroctylisothiazolinon, Zinkpyrithion, Carbendazim, Thiabendazol, 3-Jod-2-propinylbutylcarbamat (IPBC) oder Benzimidazolcarbamat bzw. die Algizide 3-(3,4-Dichlorphenyl)-1,1-dimethylharnstoff (beispielsweise Diuron® der Firma Bayer AG), 2-tert.-Butylamino-4-ethylamino-6-methylthio-s-triazin, 2-Methylthio-4-tert.-butylamino-6-cyclopropylamino-s-triazin (beispielsweise Irgarol® der Firma BASF SE), Dichlorisothiazolinon oder 2-Methylthio-4-cyclopropylamino-6-tertiärbutylamino-1,3,5-triazin) eingesetzt werden, welche häufig auch noch allergene und akut toxische Eigenschaften aufweisen. Problematisch kann auch sein, dass die fungiziden und/oder algiziden Wirkstoffe durch Wettereinflüsse aus den Beschichtungen herausgewaschen werden können, mit negativen Auswirkungen für die Beschichtungen selbst sowie für die Umwelt.

Aufgabe der vorliegenden Erfindung war es daher günstige und dennoch hochwirksame Bindemittel bzw. diese Bindemittel enthaltende Beschichtungsformulierungen mit fungizider und/oder algizider Wirkung zur Verfügung zu stellen.

Demgemäß wurde das eingangs definierte Bindemittel gefunden.

Wesentlicher Bestandteil des erfindungsgemäßen Bindemittels ist ein Polymerisat A, welches eine Glasübergangstemperatur im Bereich ≥ -60 und ≤ 70 °C aufweist. Als Polymerisate A kommen im Rahmen der vorliegenden Erfindung alle natürlich vorkommenden und/oder synthetisch hergestellten Polymerisate in Betracht, welche eine Glasübergangstemperatur im vorgenannten Bereich aufweisen. Beispielhaft für Polymerisate A auf Basis von Naturstoffen seien Nitrocellulose, Celluloseester, Kolophonium, Schellack, Leinöl und/oder Holzöl genannt. Bei den synthetisch hergestellten Polymerisaten A seien beispielhaft Polykondensationsprodukte, wie beispielsweise Alkydharze, Polyester, Polyamide, Silikonharze und/oder Epoxyharze sowie Polyadditionsprodukte, wie beispielsweise Polyurethane genannt. Bei den Polyadditionsprodukten handelt es sich jedoch bevorzugt um Polymerisate, welche aus ethylenisch ungesättigten Verbindungen in einpolymerisierter Form aufgebaut sind. Die Herstellung dieser Polyadditionsverbindungen erfolgt in der Regel durch dem Fachmann geläufige metallkomplexkatalysierte, anionisch katatysierte, kationisch katalysierte und

besonders bevorzugt durch radikalisch katalysierte Polymerisation ethylenisch ungesättigter Verbindungen.

Die radikalisch katalysierte Polymerisation von ethylenisch ungesättigten Verbindungen ist dem Fachmann geläufig und erfolgt insbesondere nach der Methode der radikalischen Substanz-, Emulsions-, Lösungs-, Fällungs- oder Suspensionspolymerisation, wobei jedoch die radikalisch initiierte wässrige Emulsionspolymerisation insbesondere bevorzugt ist.

Die Durchführung von radikalisch initiierten Emulsionspolymerisationen von ethylenisch ungesättigten Verbindungen (Monomere) in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die Monomere, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise schaum- oder viskositätsmodifizierende Additive zugesetzt. Von dieser allgemeinen Verfahrensweise unterscheidet sich die Herstellung einer wässrigen Dispersion des Polymerisats A lediglich dadurch, dass Monomeren in Art und Menge so gewählt werden, dass die gebildeten Polymerisate A eine Glasübergangstemperatur im Bereich $\geq$ -60 und $\leq$ 70 °C aufweisen. Dabei ist es selbstverständlich, dass zur Herstellung der Polymerisate A im Rahmen der vorliegenden Schrift auch die dem Fachmann geläufigen Saat-, Stufen- und Gradientenfahrweisen mit umfasst sein sollen.

Als Monomere kommen insbesondere in einfacher Weise radikalisch polymerisierbare Monomere in Betracht, wie beispielsweise Ethylen, vinylaromatische Monomere, wie Styrol, $\alpha$-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-,-iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile $\alpha,\beta$-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien und Isopren. Die genannten Monomere bilden in der Regel die Hauptmonomeren, die, bezogen auf die zur Herstellung des Polymerisats A eingesetzte Menge aller ethylenisch ungesättigter Verbindungen (Gesamtmonomerenmenge), einen Anteil $\geq$ 50 Gew.-%, bevorzugt $\geq$ 80 Gew.-% und insbesondere bevorzugt $\geq$ 90 Gew.-% auf sich vereinen. In aller Regel weisen diese Monomeren in Wasser bei Normalbedingungen [20 °C, 1 atm (= 1,013 bar absolut)] lediglich eine mäßige bis geringe Löslichkeit auf.

Monomere, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien $\alpha,\beta$-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten Monomeren lediglich als modifizierende Monomere in Mengen $\leq$ 10 Gew.-% und bevorzugt $\leq$ 5 Gew.-%, bezogen auf die Gesamtmonomerenmenge, enthalten.

Monomere, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und - methacrylat sowie Verbindungen, wie Diacetonacrylamid und Acetylacetoxyethylacrylat bzw.-methacrylat. Häufig werden die vorgenannten Monomeren in Mengen ≤ 5 Gew.-%, bevorzugt jedoch in Mengen ≤ 3 Gew.-%, jeweils bezogen auf die Gesamtmonomerenmenge, eingesetzt.

Erfindungsgemäß vorteilhaft sind wässrige Polymerisatdispersionen, deren Polymerisate A

| | |
|---|---|
| ≥ 50 und ≤ 99,9 Gew.-% | Ester der Acryl- und/oder Methacrylsäure mit 1 bis 12 C-Atome aufweisenden Alkanolen und/oder Styrol, |
| oder | |
| ≥ 40 und ≤ 99,9 Gew.-% | Styrol und/oder Butadien, |
| oder | |
| ≥ 50 und ≤ 99,9 Gew.-% | Vinylchlorid und/oder Vinylidenchlorid, |
| oder | |
| ≥ 40 und ≤ 99,9 Gew.-% | Vinylacetat, Vinylpropionat und/oder Ethylen |

in einpolymerisierter Form enthalten.

Insbesondere vorteilhaft sind erfindungsgemäß wässrige Polymerisatdispersionen, deren Polymerisate A

| | |
|---|---|
| ≥ 0,1 und ≤ 5 Gew.-% | wenigstens eine 3 bis 6 C-Atome aufweisende α,β-monoethylenisch ungesättigte Mono- und/oder Dicarbonsäure und/oder deren Amid, und |
| ≥ 50 und ≤ 99,9 Gew.-% | wenigstens eines Esters der Acryl- und/oder Methacrylsäure mit 1 bis 12 C-Atome aufweisenden Alkanolen und/oder Styrol, |
| oder | |
| ≥ 0,1 und ≤ 5 Gew.-% | wenigstens eine 3 bis 6 C-Atome aufweisende α,β-monoethylenisch ungesättigte Mono- und/oder Dicarbonsäure und/oder deren Amid, und |
| ≥ 40 und ≤ 99,9 Gew.-% | Styrol und/oder Butadien, |
| oder | |
| ≥ 0,1 und ≤ 5 Gew.-% | wenigstens eine 3 bis 6 C-Atome aufweisende α,β-monoethylenisch ungesättigte Mono- und/oder Dicarbonsäure und/oder deren Amid, und |
| ≥ 50 und ≤ 99,9 Gew.-% | Vinylchlorid und/oder Vinylidenchlorid, |
| oder | |
| ≥ 0,1 und ≤ 5 Gew.-% | wenigstens eine 3 bis 6 C-Atome aufweisende α,β-monoethylenisch ungesättigte Mono- und/oder Dicarbonsäure und/oder deren Amid, und |
| ≥ 40 und ≤ 99,9 Gew.-% | Vinylacetat, Vinylpropionat und/oder Ethylen |

in einpolymerisierter Form enthalten.

Die radikalisch initiierte wässrige Emulsionspolymerisation zur Herstellung der Polymerisate A wird in der Regel in Gegenwart von 0,1 bis 5 Gew.-%, vorzugsweise 0,1 bis 4 Gew.-% und insbesondere 0,1 bis 3 Gew.-%, jeweils bezogen auf die Gesamtmonomerenmenge, eines radikalischen Polymerisationsinitiators (Radikalinitiator) durchgeführt. Als Radikalinitiatoren kommen alle diejenigen in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische

Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im Wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Selbstverständlich können auch sogenannte Redoxinitiatorensysteme als Radikalinitiatoren eingesetzt werden. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Üblicherweise werden bei der Herstellung der Polymerisate A durch radikalisch initiierten wässrigen Emulsionspolymerisation Dispergierhilfsmittel mitverwendet, die sowohl die Monomerentröpfchen als auch Polymerisatteilchen in der wässrigen Phase dispers verteilt halten und so die Stabilität der erzeugten wässrigen Dispersionen der Polymerisate A gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Selbstverständlich können auch Gemische aus Emulgatoren und/oder Schutzkolloiden verwendet werden. Vorzugsweise werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Gebräuchliche Emulgatoren sind z.B. ethoxilierte Mono-, Di- und Tri-Alkylphenole (EO-Grad: 3 bis 50, Alkylrest: C4 bis C12), ethoxilierte Fettalkohole (EO-Grad: 3 bis 50; Alkylrest: C8 bis C36) sowie Alkalimetall- und Ammoniumsalze von Alkylsulfaten (Alkylrest: C8 bis C12), von Schwefelsäurehalbestern ethoxylierter Alkanole (EO-Grad: 4 bis 30, Alkylrest: C12 bis C18) und ethoxilierter Alkylphenole (EO-Grad: 3 bis 50, Alkylrest: C4 bis C12), von Alkylsulfonsäuren (Alkylrest: C12 bis C18) und von Alkylarylsulfonsäuren (Alkylrest: C9 bis C18). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I

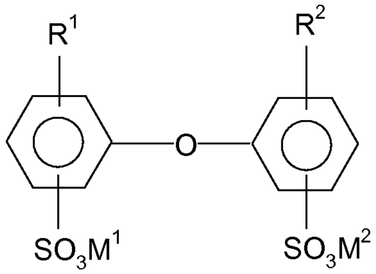

(I) ,

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Vorteilhaft werden bei der Herstellung der Polymerisate A durch radikalisch initiierten wässrigen Emulsionspolymerisation nichtionische und/oder anionische Dispergierhilfsmittel verwendet. Es können jedoch auch kationische

Dispergierhilfsmittel eingesetzt werden.

In der Regel beträgt die Menge an eingesetztem Dispergierhilfsmittel 0,1 bis 5 Gew.-%, bevorzugt 1 bis 3 Gew.-%, jeweils bezogen auf die Gesamtmonomerenmenge. Häufig ist es günstig, wenn eine Teil- oder die Gesamtmenge des Dispergierhilfsmittels dem wässrigen Reaktionsmedium vor der Initiierung der radikalischen Polymerisation zugeführt wird. Darüber hinaus kann eine Teil- oder die Gesamtmenge des Dispergierhilfsmittels dem wässrigen Reaktionsmedium vorteilhaft auch gemeinsam mit den Monomeren, insbesondere in Form einer wässrigen Monomerenemulsion während der Polymerisation zugeführt werden.

Radikalkettenübertragende Verbindungen werden üblicherweise eingesetzt, um das Molekulargewicht der durch eine radikalisch initiierte wässrige Emulsionspolymerisation zugänglichen Polymerisate A zu reduzieren bzw. zu kontrollieren. Dabei kommen im Wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Weley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die bei der Herstellung der Polymerisate A durch radikalisch initiierten wässrigen Emulsionspolymerisation optional eingesetzte Gesamtmenge der radikalkettenübertragenden Verbindungen, beträgt in der Regel < 5 Gew.-%, oft < 3 Gew.-% und häufig < 1 Gew.-%, jeweils bezogen auf die Gesamtmonomerenmenge.

Neben der saatfreien Herstellungsweise kann zur Einstellung der Polymerisatteilchengröße die Emulsionspolymerisation zur Herstellung der Polymerisate A nach dem Saatlatex-Verfahren oder in Gegenwart eines in situ hergestellten Saatlatex erfolgen. Verfahren hierzu sind dem Fachmann bekannt und können dem Stand der Technik entnommen werden (siehe beispielsweise EP-B 40 419, EP-A 567 812, EP-A 614 922 sowie 'Encyclopedia of Polymer Science and Technology', Vol. 5, Seite 847, John Wiley & Sons Inc., New York, 1966). So empfiehlt der Stand der Technik, beim semikontinuierlichen Zulaufverfahren eine definierte feinteilige Saat-Polymerisatdispersion im Polymerisationsgefäß vorzulegen und dann die Monomeren in Gegenwart des Saatlatices zu polymerisieren. Hierbei wirken die Saat-Polymerisatteilchen als 'Polymerisationskeime' und entkoppeln die Polymersatteilchenbildung und das Polymerisatteilchenwachstum. Während der Emulsionspolymerisation kann weitere Saatlatex direkt in den Polymerisationsreaktor zugegeben werden. Hierdurch werden breite Größenverteilungen der Polymerisatteilchen erreicht, die insbesondere bei Polymerisatdispersionen mit hohem Feststoffgehalt oftmals erwünscht sind (vgl. hierzu beispielsweise DE-A 4213965). Anstelle der Zugabe eines definierten Saatlatices kann dieser auch in situ erzeugt werden. Hierzu wird beispielsweise eine Teilmenge der zur Polymerisation eingesetzten Monomeren und des Radikalinitiators zusammen mit einer Teil- oder der Gesamtmenge des Emulgators vorgelegt und auf Reaktionstemperatur erwärmt, wobei eine relativ feinteilige Polymersaat entsteht. Anschließend wird im gleichen Polymerisationsgefäß die eigentliche Polymerisation nach dem Zulaufverfahren durchgeführt (siehe auch DE-A 4213965).

Vorteilhaft erfolgt Herstellung der Polymerisate A durch radikalisch initiierten wässrigen Emulsionspolymerisation bei einer Reaktionstemperatur im Bereich von 0 bis 170 °C, wobei jedoch Temperaturen von 70 bis 120 °C und insbesondere 80 bis 100 °C besonders bevorzugt sind. Die radikalische wässrige Emulsionspolymerisation kann bei einem Druck kleiner, gleich oder größer 1 atm (absolut) durchgeführt werden. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar (Überdruck) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Emulsionspolymerisation bei 1 atm (= Atmosphärendruck) unter Inertgasatmosphäre, wie beispielsweise unter Stickstoff oder Argon durchgeführt.

Bei der radikalisch initiierten wässrigen Emulsionspolymerisation kann das wässrige Reaktionsmedium prinzipiell auch in untergeordneten Mengen (< 5 Gew.-%) wasserlösliche organische Lösungsmittel, wie beispielsweise Methanol, Ethanol, Isopropanol, Butanole, Pentanole, aber auch Aceton etc. umfassen. Bevorzugt erfolgt die radikalisch initiierte wässrige Emulsionspolymerisation jedoch in Abwesenheit solcher Lösungsmittel durchgeführt.

Die erfindungsgemäß eingesetzten Polymerisate A können prinzipiell Glasübergangstemperaturen Tg im Bereich von ≥ -60 und ≤ 70 °C aufweisen. Mit Vorteil weisen die Polymerisate A eine Glasübergangstemperatur Tg im Bereich von ≥ -40 und ≤ 50 °C und vorteilhaft im Bereich ≥ -25 und ≤ 40 °C auf. Unter Glasübergangstemperatur Tg wird im Rahmen dieser Schrift die midpoint temperature nach ASTM D 3418-82 verstanden, ermittelt durch Differentialthermoanalyse (DSC) [vgl. auch Ullmann's Encyclopedia of Industrial Chemistry, Seite 169, Verlag Chemie, Weinheim, 1992 und Zosel in Farbe und Lack, 82, Seiten 125 bis 134, 1976].

Von Bedeutung ist ferner, dass nach Fox (T.G. Fox, Bull. Am. Phys. Soc. 1956 [Ser. 11] 1, Seite 123 und gemäß Ullmann's Encyclopädie der technischen Chemie, Bd. 19, Seite 18, 4. Auflage, Verlag Chemie, Weinheim, 1980) die Glasübergangstemperatur von höchstens schwach vernetzten Mischpolymerisaten in guter Näherung nach folgender Gleichung abgeschätzt werden kann

$$1/Tg = x_1/Tg_1 + x_2/Tg_2 + .... x_n/Tg_n,$$

wobei $x_1$, $x_2$, .... $x_n$ die Massenbrüche der Monomeren 1, 2, .... n und $Tg_1$, $Tg_2$, .... $Tg_n$ die Glasübergangstemperaturen der jeweils nur aus einem der Monomeren 1, 2, .... n aufgebauten Homopolymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Cncyclopedia of Industrial Chemistry, Seite 169, Verlag Chemie, Weinheim, 1992, aufgeführt.

Die durch Emulsionspolymerisation zugänglichen wässrigen Polymerisate A in Form ihrer wässrigen Dispersionen (wässrige Polymerisat A-Dispersionen) weisen üblicherweise einen Polymerisatfeststoffgehalt von ≥ 10 und ≤ 70 Gew.-%, häufig ≥ 20 und ≤ 65 Gew.-% und oft ≥ 25 und ≤ 60 Gew.-%, jeweils bezogen auf die wässrige Polymerisatdispersion, auf.

Mit besonderem Vorteil liegen die Polymerisate A daher in Form von Teilchen mit einem mittleren Teilchendurchmesser ≥ 10 und ≤ 1000 nm, vorteilhaft ≥ 30 und ≤ 600 nm und besonders vorteilhaft ≥ 50 bis ≤ 400 nm, bestimmt nach der Methode der quasielastische Lichtstreuung (ISO-Norm 13 321; cumulant z-average), vor (Teilchen A).

Selbstverständlich lassen sich wässrige Polymerisat A-Dispersionen prinzipiell auch in Form sogenannter sekundärer Polymerisatdispersionen herstellen (zur prinzipiellen Herstellung von sekundären Polymerisatdispersionensiehe beispielsweise Eckersley et al., Am. Chem. Soc., Div. Polymer Chemistry, 1977, 38(2), Seiten 630, 631, US-A 3360599, US-A 3238173, US-A 3726824, US-A 3734686 oder US-A 6207756). Die Herstellung der sekundären wässrigen Polymerisat A-Dispersionen erfolgt dabei in der Regel dergestalt, dass die nach der Methode der Substanz- oder Lösungspolymerisation hergestellten Polymerisate A in einem geeigneten organischen Lösemittel aufgelöst und unter Ausbildung von wässrigen Polymeren/Lösemittel-(Mini)emulsionen in ein wässriges Medium dispergiert werden. Anschließende Lösemittelabtrennung liefert die entsprechenden wässrigen Polymerisat A-Dispersionen.

Dementsprechend enthalten die erfindungsgemäßen Bindemittel vorteilhaft wässrige Dispersionen von Polymerisaten A, deren mittleren Teilchendurchmesser ≥ 10 und ≤ 1000 nm, vorteilhaft ≥ 30 und ≤ 600 nm und besonders vorteilhaft ≥ 50 bis ≤ 400 nm betragen.

Von Bedeutung ist ferner, dass sich die wässrigen Polymerisat A-Dispersionen durch dem Fachmann geläufige Trocknungsverfahren, beispielsweise Gefriertrocknung oder insbesondere vorteilhaft Sprühtrocknung in die entsprechenden Polymerisat A-Pulver überführen lassen.

In einer bevorzugten Ausführungsform enthält das Polymerisat A zusätzlich noch einen feinteiligen anorganischen Feststoff mit einem mittleren Teilchendurchmesser > 0 und ≤ 100 nm, ermittelt nach der Methode der Analytischen Ultrazentrifuge (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). Dabei entsprechen die bei den Teilchendurchmessern angegebenen Werte den sogenannten $d_{50}$-Werten. Als feinteiliger anorganischer Feststoff bevorzugt ist eine siliziumhaltige Verbindung, wie insbesondere pyrogene und/oder kolloidale Kieselsäure, Siliziumdioxid-Sol und/oder Schichtsilikat. Dabei weist der feinteilige anorganische Feststoff mit Vorteil einen mittleren Teilchendurchmesser ≥ 5 und ≤ 50 nm auf. In einer vorteilhaften Ausführungsform beträgt das Gewichtsverhältnis von Polymerisat A zu feinteiligem anorganischem Feststoff 95:5 bis 40:60.

In einer besonders bevorzugten Ausführungsform liegt das den feinteiligen anorganischen Feststoff enthaltende Polymerisat A in Form von Partikeln (Kompositpartikel) vor, welche in wässrigem Medium dispergiert sind (wässrige Kompositpartikel-Dispersionen).

Wässrige Kompositpartikel-Dispersionen sind allgemein bekannt. Es handelt sich dabei prinzipiell um fluide Systeme, die als disperse Phase in wässrigem Dispergiermedium aus mehreren ineinander verschlungenen Polymerisatketten bestehenden Polymerisatknäuel, die sogenannte Polymermatrix und feinteiligem anorganischen Feststoff aufgebaute Partikel in disperser Verteilung befindlich enthalten. Der Durchmesser der Kompositpartikel liegt in der Regel im Bereich ≥ 10 und ≤ 1000 nm.

Kompositpartikel und Verfahren zu ihrer Herstellung in Form von wässrigen Kompositpartikel-Dispersionen sowie deren Verwendung sind dem Fachmann bekannt und beispielsweise in den Schriften US-A 3,544,500, US-A 4,421,660, US-A 4,608,401, US-A 4,981,882, EP-A 104 498, EP-A 505 230, EP-A 572 128, GB-A 2 227 739, WO 0118081, WO 0129106, WO 03000760 sowie in Long et al., Tianjin Daxue Xuebao 1991, 4, Seiten 10 bis 15, Bourgeat-Lami et al.,Die Angewandte Makromolekulare Chemie 1996, 242, Seiten 105 bis 122, Paulke et al., Synthesis Studies of Paramagnetic Polystyrene Latex Particles in Scientific and Clinical Applications of Magnetic Carriers, Seiten 69 bis 76, Plenum Press, New York, 1997, Armes et al., Advanced Materials 1999, 11, Nr. 5, Seiten 408 bis 410 offenbart. Die erfindungsgemäß eingesetzten Kompositpartikel und deren wässrige Dispersionen können prinzipiell nach den bekannten Verfahren des Standes der Technik hergestellt werden, wobei jedoch die zur Herstellung der Kompositpartikel verwendeten Monomere in Art und Menge so gewählt werden, dass ein Polymerisat A mit einer Glasübergangstemperatur ≥ -60 und ≤ 70 °C, vorteilhaft ≥ -40 und ≤ 50 °C und besonders vorteilhaft ≥ -25 und ≤ 40 °C gebildet wird und ein feinteiliger anorganischer Feststoff mit einem mittleren Teilchendurchmesser > 0 und ≤ 100 nm, vorteilhaft ≥ 5 und ≤ 50 nm, ermittelt nach der Methode der Analytischen Ultrazentrifuge, eingesetzt wird.

Vorteilhaft werden die wässrigen Dispersionen der Teilchen A, welche feinteiligen anorganischen Feststoff enthalten, nach einer Verfahrensweise hergestellt, welche in der WO 03000760 offenbart ist und auf die im Rahmen dieser Schrift ausdrücklich Bezug genommen werden soll. Dieses Verfahren zeichnet sich dadurch aus, dass wenigstens ein Monomer in wässrigem Medium dispers verteilt und mittels wenigstens eines radikalischen Polymerisationsinitiators im Beisein wenigstens eines dispers verteilten, feinteiligen anorganischen Feststoffs und wenigstens eines Dispergiermittels nach der Methode der radikalisch wässrigen Emulsionspolymerisation polymerisiert wird, wobei

a) eine stabile wässrige Dispersion des wenigstens einen anorganischen Feststoffs eingesetzt wird, welche dadurch charakterisiert ist, dass sie bei einer Anfangsfeststoffkonzentration von ≥ 1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen gewichtsmittleren Durchmesser ≤ 100 nm aufweisen,

b) die dispergierten Feststoffteilchen des wenigstens einen anorganischen Feststoffs in einer wässrigen Standardkaliumchlorid-Lösung bei einem pH-Wert, der dem pH-Wert des wässrigen Dispergiermediums vor Beginn der Zugabe der Dispergiermittel entspricht, eine von Null verschiedene elektrophoretische Mobilität zeigen,

c) die wässrige Feststoffteilchendispersion vor Beginn der Zugabe des wenigstens einen Monomeren mit wenigstens einem anionischen, kationischen und nichtionischen Dispergiermittel versetzt wird,

d) danach von der Gesamtmenge des wenigstens einen Monomeren 0,01 bis 30 Gew.-% der wässrigen Feststoffteilchendispersion zugesetzt und bis zu einem Umsatz von wenigstens 90 % polymerisiert werden
und

e) daran anschließend die Restmenge des wenigstens einen Monomeren unter Polymerisationsbedingungen nach Maßgabe des Verbrauchs kontinuierlich zugegeben wird.

Ebenfalls vorteilhaft werden die wässrigen Dispersionen der Teilchen A, welche feinteiligen anorganischen Feststoff enthalten, nach einer Verfahrensweise hergestellt, welche in der WO 10118961 offenbart ist und auf die im Rahmen dieser Schrift ebenfalls ausdrücklich Bezug genommen werden soll. Diese Verfahrensweise zeichnet sich dadurch aus, dass wenigstens ein Monomer in einem wässrigen Medium dispers verteilt und mittels wenigstens eines radikalischen Polymerisationsinitiators im Beisein wenigstens eines dispers verteilten, feinteiligen anorganischen Feststoffes und wenigstens eines Dispergierhilfsmittels nach der Methode der radikalisch wässrigen Emulsionspolymerisation polymerisiert werden, wobei

a) 1 bis 1000 Gew.-% eines anorganischen Feststoffes mit einer mittleren Teilchengröße ≤ 100 nm und 0,05 bis 2 Gew.-% eines radikalischen Polymerisationsinitiators, bezogen auf die Gesamtmenge an Monomeren (Gesamtmonomerenmenge) eingesetzt werden,

b) wenigstens eine Teilmenge des anorganischen Feststoffs in einem wässrigen Polymerisationsmedium in Form einer wässrigen Feststoffdispersion vorgelegt wird, daran anschließend

c) der erhaltenen wässrigen Feststoffdispersion insgesamt ≥ 0,01 und ≤ 20 Gew.-% der Gesamtmonomerenmenge und ≥ 60 Gew.-% der Gesamtmenge an radikalischem Polymerisationsinitiator zudosiert und die zudosierten Monomeren unter Polymerisationsbedingungen bis zu einem Monomerenumsatz ≥ 80 Gew.-% polymerisiert werden (Polymerisationsstufe 1), und daran anschließend dem erhaltenen Polymerisationsgemisch

d) die gegebenenfalls verbliebene Restmenge des anorganischen Feststoffs, die gegebenenfalls verbliebene Restmenge des radikalischen Polymerisationsinitiators und die verbliebene Restmenge der Monomeren unter Polymerisationsbedingungen zudosiert und bis zu einem Monomerenumsatz ≥ 90 Gew.-% polymerisiert werden (Polymerisationsstufe 2).

Für das in der WO 03000760 offenbarte Verfahren sind alle diejenigen feinteiligen anorganischen Feststoffe geeignet, welche stabile wässrige Dispersionen ausbilden, die bei einer Anfangsfeststoffkonzentration von ≥ 1 Gew.-%, bezogen auf die wässrige Dispersion des wenigstens einen anorganischen Feststoffs, noch eine Stunde nach ihrer Herstellung ohne Rühren oder Schütteln mehr als 90 Gew.-% des ursprünglich dispergierten Feststoffes in dispergierter Form enthalten und deren dispergierten Feststoffteilchen einen Durchmesser ≤ 100 nm aufweisen und darüber hinaus bei einem pH-Wert, der dem pH-Wert des wässrigen Reaktionsmediums vor Beginn der Zugabe der Dispergiermittel entspricht, eine von Null verschiedene elektrophoretische Mobilität zeigen.

Die quantitative Bestimmung der Anfangsfeststoffkonzentration und der Feststoffkonzentration nach einer Stunde sowie die Ermittlung der Teilchendurchmesser erfolgt über die Methode der Analytischen Ultrazentrifuge (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). Die bei den Teilchendurchmesser angegebenen Werte entsprechen den sogenannten d50-Werten.

Die Methode zur Bestimmung der elektrophoretischen Mobilität ist dem Fachmann bekannt (vgl. z.B. R.J. Hunter, Introduction to modern Colloid Science, Kapitel 8.4, Seiten 241 bis 248, Oxford University Press, Oxford, 1993 sowie K. Oka und K. Furusawa, in Electrical Phenomena at Interfaces, Surfactant Science Series, Vol. 76, Kapitel 8, Seiten 151 bis 232, Marcel Dekker, New York, 1998). Die elektrophoretische Mobilität der im wässrigen Reaktionsmedium dispergierten Feststoffteilchen wird mittels eines handelsüblichen Elektrophoresegeräts, wie beispielsweise dem Zetasizer 3000 der Fa. Malvern Instruments Ltd., bei 20 °C und 1 bar (absolut) bestimmt. Hierzu wird die wässrige Feststoffteilchendispersion mit einer pH-neutralen 10 millimolaren (mM) wässrigen Kaliumchlorid-Lösung (Standardkaliumchlorid-Lösung) soweit verdünnt, dass die Feststoffteilchen-Konzentration ca. 50 bis 100 mg/l beträgt. Die Einstellung der Messprobe auf den pH-Wert, den das wässrige Reaktionsmedium vor Beginn der Zugabe der Dispergiermittel aufweist, erfolgt mittels der gängigen anorganischen Säuren, wie beispielsweise verdünnte Salzsäure oder Salpetersäure oder Basen, wie beispielsweise verdünnte Natronlauge oder Kalilauge. Die Wanderung der dispergierten Feststoffteilchen im elektrischen Feld wird mittels der sogenannten elektrophoretischen Lichtstreuung detektiert (vgl. z.B. B.R. Ware und W.H. Flygare, Chem. Phys. Lett. 1971, 12, Seiten 81 bis 85). Dabei wird das Vorzeichen der elektrophoretischen Mobilität durch die Wanderungsrichtung der dispergierten Feststoffteilchen definiert, d.h. wandern die dispergierten Feststoffteilchen zur Kathode, ist deren elektrophoretische Mobilität positiv, wandern sie dagegen zur Anode, ist sie negativ.

Ein geeigneter Parameter, um die elektrophoretische Mobilität von dispergierten Feststoffteilchen in einem gewissen Umfang zu beinflussen oder einzustellen, ist der pH-Wert des wässrigen Reaktionsmediums. Durch Protonierung bzw. Deprotonierung der dispergierten Feststoffteilchen wird die elektrophoretische Mobilität im sauren pH-Bereich (pH-Wert < 7) in positiver und im alkalischen Bereich (pH-Wert > 7) in negativer Richtung verändert. Ein für das in der WO 03000760 offenbarte Verfahren geeigneter pH-Bereich ist der, innerhalb dessen sich eine radikalisch initiierte wässrige Emulsionspolymerisation durchführen lässt. Dieser pH-Bereich liegt in der Regel bei pH 1 bis 12, häufig bei pH 1,5 bis 11 und oft bei pH 2 bis 10.

Der pH-Wert des wässrigen Reaktionsmediums kann mittels handelsüblicher Säuren, wie beispielsweise verdünnte Salz-, Salpeter- oder Schwefelsäure oder Basen, wie beispielsweise verdünnte Natron- oder Kalilauge, eingestellt werden. Häufig ist es günstig, wenn eine Teil- oder die Gesamtmenge der zur pH-Einstellung verwendeten Säure- oder Basenmenge dem wässrigen Reaktionsmedium vor dem wenigstens einen feinteiligen anorganischen Feststoff zugesetzt wird.

Vorteilhaft für das gemäß WO 03000760 offenbarte Verfahren ist, dass dann, wenn die dispergierten Feststoffteilchen unter den vorgenannten pH-Bedingungen

- eine elektrophoretische Mobilität mit negativem Vorzeichen aufweisen, pro 100 Gew.-Teilen des wenigstens einen Monomeren, 0,01 bis 10 Gew.-Teile, bevorzugt 0,05 bis 5 Gew.-Teile und insbesondere bevorzugt 0,1 bis 3 Gew.-Teile wenigstens eines kationischen Dispergiermittels, 0,01 bis 100 Gew.-Teile, bevorzugt 0,05 bis 50 Gew.-Teile und insbesondere bevorzugt 0,1 bis 20 Gew.-Teile wenigstens eines nichtionischen Dispergiermittels und wenigstens

ein anionisches Dispergiermittel eingesetzt werden, wobei dessen Menge so bemessen wird, dass das äquivalente Verhältnis von anionischem zu kationischem Dispergiermittel größer 1 ist, oder

- eine elektrophoretische Mobilität mit positivem Vorzeichen aufweisen, pro 100 Gew.-Teilen des wenigstens einen Monomeren, 0,01 bis 10 Gew.-Teile, bevorzugt 0,05 bis 5 Gew.-Teile und insbesondere bevorzugt 0,1 bis 3 Gew.-Teile wenigstens eines anionischen Dispergiermittels, 0,01 bis 100 Gew.-Teile, bevorzugt 0,05 bis 50 Gew.-Teile und insbesondere bevorzugt 0,1 bis 20 Gew.-Teile wenigstens eines nichtionischen Dispergiermittels und wenigstens ein kationisches Dispergiermittel eingesetzt werden, wobei dessen Menge so bemessen wird, dass das äquivalente Verhältnis von kationischem zu anionischem Dispergiermittel größer 1 ist.

Unter äquivalentem Verhältnis von anionischem zu kationischem Dispergiermittel wird das Verhältnis der eingesetzten Molzahl des anionischen Dispergiermittels multipliziert mit der Anzahl der pro Mol des anionischen Dispergiermittels enthaltenen anionischen Gruppen dividiert durch die eingesetzte Molzahl des kationischen Dispergiermittels multipliziert mit der Anzahl der pro Mol des kationischen Dispergiermittels enthaltenen kationischen Gruppen verstanden. Entsprechendes gilt für das äquivalente Verhältnis von kationischem zu anionischem Dispergiermittel.

Die Gesamtmenge des gemäß der WO 03000760 verwendeten wenigstens einen anionischen, kationischen und nichtionischen Dispergiermittels kann in der wässrigen Feststoffdispersion vorgelegt werden. Es ist jedoch auch möglich, lediglich eine Teilmenge der genannten Dispergiermittel, in der wässrigen Feststoffdispersion vorzulegen und die verbliebenen Restmengen während der radikalischen Emulsionspolymerisation kontinuierlich oder diskontinuierlich zuzugeben. Verfahrenswesentlich ist jedoch, dass vor und während der radikalisch initiierten Emulsionspolymerisation das vorgenannte äquivalente Verhältnis von anionischem und kationischem Dispergiermittel in Abhängigkeit vom elektrophoretischen Vorzeichen des feinteiligen Feststoffs aufrechterhalten wird. Werden daher anorganische Feststoffteilchen eingesetzt, welche unter den vorgenannten pH-Bedingungen eine elektrophoretische Mobilität mit negativem Vorzeichen aufweisen, so muss das äquivalente Verhältnis von anionischem zu kationischem Dispergiermittel während der gesamten Emulsionspolymerisation größer 1 sein. In entsprechender Weise muss bei anorganischen Feststoffteilchen mit einer elektrophoretischen Mobilität mit positivem Vorzeichen das äquivalente Verhältnis von kationischem zu anionischem Dispergiermittel während der gesamten Emulsionspolymerisation größer 1 sein. Günstig ist es, wenn die äquivalenten Verhältnisse $\geq 2$, 3, $\geq 4$, $\geq 5$, $\geq 6$, $\geq 7$, oder $\geq 10$ sind, wobei die äquivalenten Verhältnisse im Bereich zwischen 2 und 5 besonders günstig sind.

Für die beiden vorgenannten explizit offenbarten Verfahren sowie allgemein zur Herstellung von Kompositpartikeln einsetzbare feinteilige anorganische Feststoffe sind Metalle, Metallverbindungen, wie Metalloxide und Metallsalze aber auch Halbmetall- und Nichtmetallverbindungen geeignet. Als feinteilige Metallpulver können Edelmetallkolloide, wie beispielsweise Palladium, Silber, Ruthenium, Platin, Gold und Rhodium sowie diese enthaltende Legierungen eingesetzt werden. Als feinteilige Metalloxide beispielhaft genannt seien Titandioxid (beispielsweise kommerziell verfügbar als Hombitec®-Marken der Fa. Sachtleben Chemie GmbH), Zirkonium-(IV)-oxid, Zinn-(II)-oxid, Zinn-(IV)-oxid (beispielsweise kommerziell verfügbar als Nyacol® SN-Marken der Fa. Nyacol Nano Technologies Inc.), Aluminiumoxid (beispielsweise kommerziell verfügbar als Nyacol® AL-Marken der Fa. Nyacol Nano Technologies Inc.), Bariumoxid, Magnesiumoxid, verschiedene Eisenoxide, wie Eisen-(II)-oxid (Wuestit), Eisen-(III)-oxid (Hämatit) und Eisen-(II/III)-oxid (Magnetit), Chrom-(III)-oxid, Antimon-(III)-oxid, Wismut-(III)-oxid, Zinkoxid (beispielsweise kommerziell verfügbar als Sachtotec®-Marken der Fa. Sachtleben Chemie GmbH), Nickel-(II)-oxid , Nickel-(III)-oxid, Cobalt-(II)-oxid, Cobalt-(III)-oxid, Kupfer-(II)-oxid, Yttrium-(III)-oxid (beispielsweise kommerziell verfügbar als Nyacol® YTTRIA-Marken der Fa. Nyacol Nano Technologies Inc.), Cer-(IV)-oxid (beispielsweise kommerziell verfügbar als Nyacol® CEO2-Marken der Fa. Nyacol Nano Technologies Inc.) amorph und/oder in ihren unterschiedlichen Kristallmodifikationen sowie deren Hydroxyoxide, wie beispielsweise Hydroxytitan-(IV)-oxid, Hydroxyzirkonium-(IV)-oxid, Hydroxyaluminiumoxid (beispielsweise kommerziell verfügbar als Disperal®-Marken der Fa. Sasol GmbH) und Hydroxyeisen-(III)-oxid amorph und/oder in ihren unterschiedlichen Kristallmodifikationen. Folgende amorphen und/oder in ihren unterschiedlichen Kristallstrukturen vorliegenden Metallsalze sind im erfindungsgemäßen Verfahren prinzipiell einsetzbar: Sulfide, wie Eisen-(II)-sulfid, Eisen-(III)-sulfid, Eisen-(II)-disulfid (Pyrit), Zinn-(II)-sulfid, Zinn-(IV)-sulfid, Quecksilber-(II)-sulfid, Cadmium-(II)-sulfid, Zinksulfid, Kupfer-(II)-sulfid, Silbersulfid, Nickel-(II)-sulfid, Cobalt-(II)-sulfid, Cobalt-(III)-sulfid, Mangan-(II)-sulfid, Chrom-(III)-sulfid, Titan-(II)-sulfid, Titan-(III)-sulfid, Titan-(IV)-sulfid, Zirkon-(IV)-sulfid, Antimon-(III)-sulfid, Wismut-(III)-sulfid, Hydroxide, wie Zinn-(II)-hydroxid, Aluminiumhydroxid, Magnesiumhydroxid, Calciumhydroxid, Bariumhydroxid, Zinkhydroxid, Eisen-(II)-hydroxid, Eisen-(III)-hydroxid, Sulfate, wie Calciumsulfat, Strontiumsulfat, Bariumsulfat, Blei-(IV)-sulfat, Carbonate, wie Lithiumcarbonat, Magnesiumcarbonat, Calciumcarbonat, Zinkcarbonat, Zirkonium-(IV)-carbonat, Eisen-(II)-carbonat, Eisen-(III)-carbonat, Orthophosphate, wie Lithiumorthophosphat, Calciumorthophosphat, Zinkorthophosphat, Magnesiumorthophosphat, Aluminiumorthophosphat, Zinn-(III)-orthophosphat, Eisen-(II)-orthophosphat, Eisen-(III)-orthophosphat, Metaphosphate, wie Lithiummetaphosphat, Calciummetaphosphat, Aluminiummetaphosphat, Pyrophosphate, wie Magnesiumpyrophosphat, Calciumpyrophosphat, Zinkpyrophosphat, Eisen-(III)-pyrophosphat, Zinn-(II)-pyrophosphat, Ammoniumphosphate, wie Magnesiumammoniumphosphat, Zinkammo-

niumphosphat, Hydroxylapatit [$Ca_5\{(PO_4)_3OH\}$], Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel® SH (Marke der Rockwood Specialties Inc.), Saponit® SKS-20 und Hektorit® SKS 21 (Marken der Hoechst AG) sowie Laponite® RD und Laponite® GS (Marken der Rockwood Specialties Inc.), Aluminate, wie Lithiumaluminat, Calciumaluminat, Zinkaluminat, Borate, wie Magnesiummetaborat, Magnesiumorthoborat, Oxalate, wie Calciumoxalat, Zirkonium-(IV)-oxalat, Magnesiumoxalat, Zinkoxalat, Aluminiumoxalat, Tatrate, wie Calciumtatrat, Acetylacetonate, wie Aluminiumacetylacetonat, Eisen-(III)-acetylacetonat, Salicylate, wie Aluminiumsalicylat, Citrate, wie Calciumcitrat, Eisen-(II)-citrat, Zinkcitrat, Palmitate, wie Aluminiumpalmitat, Calciumpalmitat, Magnesiumpalmitat, Stearate, wie Aluminiumstearat, Calciumstearat, Magnesiumstearat, Zinkstearat, Laurate, wie Calciumlaurat, Linoleate, wie Calciumlinoleat, Oleate, wie Calciumoleat, Eisen-(II)-oleat oder Zinkoleat.

Als wesentliche einsetzbare Halbmetallverbindung sei amorphes und/oder in unterschiedlichen Kristallstrukturen vorliegendes Siliziumdioxid genannt. Entsprechend geeignetes Siliziumdioxid ist kommerziell verfügbar und kann beispielsweise als Aerosil® (Marke der Fa. Evonik Industries AG), Levasil® (Marke der Fa. H.C. Starck GmbH), Ludox® (Marke der Fa. DuPont), Nyacol® (Marke der Fa. Nyacol Nano-Technologies Inc.), Bindzil® (Marke der Fa. Akzo Nobel N.V.), Nalco® (Marke der Fa. Nalco Chemical Company) und Snowtex® (Marke der Fa. Nissan Chemical Industries, Ltd.) bezogen werden. Geeignete Nichtmetallverbindungen sind beispielsweise kolloidal vorliegender Graphit oder Diamant.

Als feinteilige anorganische Feststoffe sind solche besonders geeignet, deren Löslichkeit in Wasser bei 20 °C und 1 bar (absolute ≤ 1 g/l, bevorzugt ≤ 0,1 g/l und insbesondere ≤ 0,01 g/l ist. Besonders bevorzugt sind Verbindungen ausgewählt aus der Gruppe umfassend Siliziumdioxid, Aluminiumoxid, Zinn-(IV)-oxid, Yttrium-(III)-oxid, Cer-(IV)-oxid, Hydroxyaluminiumoxid, Calciumcarbonat, Magnesiumcarbonat, Calciumorthophosphat, Magnesiumorthophosphat, Calciummetaphospat, Magnesiummetaphosphat, Calciumpyrophosphat, Magnesiumpyrophosphat, Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel® SH, Saponit® SKS-20 und Hektorit® SKS 21 sowie Laponite® RD und Laponite® GS, Eisen-(II)-oxid, Eisen-(III)-oxid, Eisen-(II/III)-oxid, Titandioxid, Hydroxylapatit, Zinkoxid und Zinksulfid. Insbesondere bevorzugt sind siliziumhaltige Verbindungen, wie pyrogene und/oder kolloidale Kieselsäure, Siliziumdioxid-Sole und/oder Schichtsilikate. Häufig weisen diese siliziumhaltigen Verbindungen eine elektrophoretische Mobilität mit negativem Vorzeichen auf.

Vorteilhaft können auch die kommerziell verfügbaren Verbindungen der Aerosil®-, Levasil®-, Ludox®-, Nyacol®- und Bindzil®-Marken (Siliziumdioxid), Disperal®-Marken (Hydroxyaluminiumoxid), Nyacol® AL-Marken (Aluminiumoxid), Hombitec®-Marken (Titandioxid), Nyacol® SN-Marken (Zinn-(IV)-oxid), Nyacol® YTTRIA-Marken (Yttrium-(III)-oxid), Nyacol® CEO2-Marken (Cer-(IV)-oxid) und Sachtotec®-Marken (Zinkoxid) in den vorgenannten Verfahren sowie allgemein zur Herstellung wässriger Kompositpartikel-Dispersionen eingesetzt werden.

Die zur Herstellung der Kompositpartikel einsetzbaren feinteiligen anorganischen Feststoffe sind so beschaffen, dass die im wässrigen Reaktionsmedium dispergierten Feststoffteilchen einen Teilchendurchmesser von ≤ 100 nm aufweisen. Erfolgreich werden solche feinteiligen anorganischen Feststoffe eingesetzt, deren dispergierte Teilchen einen Teilchendurchmesser > 0 nm aber ≤ 90 nm, ≤ 80 nm, ≤ 70 nm, ≤ 60 nm, ≤ 50 nm, ≤ 40 nm, ≤ 30 nm, ≤ 20 nm oder ≤ 10 nm und alle Werte dazwischen aufweisen. Von Vorteil werden feinteilige anorganische Feststoffe eingesetzt, welche einen Teilchendurchmesser ≥ 5 und ≤ 50 nm aufweisen. Die Ermittlung der Teilchendurchmesser erfolgt über die Methode der Analytischen Ultrazentrifuge.

Die Zugänglichkeit feinteiliger Feststoffe ist dem Fachmann prinzipiell bekannt und erfolgt beispielsweise durch Fällungsreaktionen oder chemische Reaktionen in der Gasphase (vgl. hierzu E. Matijevic, Chem. Mater. 1993, 5, Seiten 412 bis 426; Ullmann's Encyclopedia of Industrial Chemistry, Vol. A 23, Seiten 583 bis 660, Verlag Chemie, Weinheim, 1992; D.F. Evans, H. Wennerström in The Colloidal Domain, Seiten 363 bis 405, Verlag Chemie, Weinheim, 1994 und R.J. Hunter in Foundations of Colloid Science, Vol. I, Seiten 10 bis 17, Clarendon Press, Oxford, 1991).

Die Herstellung der stabilen Feststoffdispersion erfolgt häufig direkt bei der Synthese der feinteiligen anorganischen Feststoffe in wässrigem Medium oder alternativ durch Eindispergieren des feinteiligen anorganischen Feststoffs in das wässrige Medium. Abhängig vom Herstellweg der feinteiligen anorganischen Feststoffe gelingt dies entweder direkt, beispielsweise beim gefälltem oder pyrogenem Siliziumdioxid, Aluminiumoxid etc. oder unter Zuhilfenahme geeigneter Hilfsaggregate, wie beispielsweise Dispergatoren oder Ultraschallsonotroden.

Vorteilhaft für die Herstellung der wässrigen Kompositpartikel-Dispersionen nach den beiden vorgenannten explizit offenbarten Verfahren, sind solche feinteiligen anorganischen Feststoffe geeignet, deren wässrige Feststoffdispersion bei einer Anfangsfeststoffkonzentration von ≥ 1 Gew.-%, bezogen auf die wässrige Dispersion des feinteiligen anorganischen Feststoffs, noch eine Stunde nach ihrer Herstellung bzw. durch Aufrühren oder Aufschütteln der sedimentierten Feststoffe, ohne weiteres Rühren oder Schütteln mehr als 90 Gew.-% des ursprünglich dispergierten Feststoffes in dispergierter Form enthält und deren dispergierten Feststoffteilchen einen Durchmesser ≤ 100 nm aufweisen. Üblich sind Anfangsfeststoffkonzentrationen ≤ 60 Gew.-%. Vorteilhaft können jedoch auch Anfangsfeststoffkonzentrationen ≤ 55 Gew.-%, ≤ 50 Gew.-%, ≤ 45 Gew.-%, ≤ 40 Gew.-%, ≤ 35 Gew.-%, ≤ 30 Gew.-%, ≤ 25 Gew.-%, ≤ 20 Gew.-%, ≤ 15 Gew.-%, ≤ 10 Gew.-% sowie ≥ 2 Gew.-%, ≥ 3 Gew.-%, ≥ 4 Gew.-% oder ≥ 5 Gew.-% und alle Werte dazwischen, jeweils bezogen auf die wässrige Dispersion des feinteiligen anorganischen Feststoffes, eingesetzt werden.

Bezogen auf 100 Gew.-Teile der Monomeren werden bei der Herstellung wässriger Kompositpartikel-Dispersionen in der Regel 1 bis 1000 Gew.-Teile, vorteilhaft 1 bis 300 Gew.-Teile und besonders vorteilhaft 5 bis 150 Gew.-Teile des wenigstens einen feinteiligen anorganischen Feststoffes verwendet. Entsprechend beträgt das Gewichtsverhältnis an Polymerisat A zu feinteiligem anorganischen Feststoff in den Kompositpartikeln A 99:1 bis 9:91, vorteilhaft 99:1 bis 25:75 und insbesondere vorteilhaft 95:5 bis 40:60.

Bei der Herstellung der wässrigen Kompositpartikel-Dispersionen nach den beiden explizit offenbarten Verfahren werden Dispergiermittel mitverwendet, die sowohl die feinteiligen anorganischen Feststoffteilchen als auch die Monomerentröpfchen und die gebildeten Kompositpartikel in der wässrigen Phase dispers verteilt halten und so die Stabilität der erzeugten wässrigen Kompositpartikel-Dispersionen gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht (siehe oben).

Zur Auslösung der radikalischen Polymerisation kommen alle diejenigen radikalischen Polymerisationsinitiatoren (Radikalinitiatoren) in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. Werden erfindungsgemäß Redoxinitiatorsysteme eingesetzt, so werden häufig die Oxidationsmittel und die Reduktionsmittel parallel zudosiert oder bevorzugt die Gesamtmenge des entsprechenden Oxidationsmittels vorgelegt und lediglich das Reduktionsmittel zudosiert. Die Gesamtmenge an Radikalinitiator wird bei Redoxinitiatorsystemen aus den Gesamtmengen an Oxidations- und Reduktionsmitteln gebildet. Als Radikalinitiatoren bevorzugt werden jedoch anorganische und organische Peroxide und insbesondere anorganische Peroxide, häufig in Form wässriger Lösungen eingesetzt. Insbesondere als Radikalinitiator bevorzugt sind Natriumperoxodisulfat, Kaliumperoxodisulfat, Ammoniumperoxodisulfat, Wasserstoffperoxid und/oder tert.-Butylhydroperoxid.

Gemäß der Lehre der WO 10118961 beträgt die Menge an insgesamt eingesetzten Radikalinitiator 0,05 bis 2 Gew.-%, vorteilhaft 0,1 bis 1,5 Gew.-% und insbesondere vorteilhaft 0,3 bis 1,0 Gew.%, jeweils bezogen auf die Gesamtmonomerenmenge. Nach den anderen Herstellverfahren kann die Menge an Radikalinitiator bis zu 5 Gew.-%, bezogen auf die Gesamtmonomerenmenge, betragen.

Erfindungswesentlich ist, dass der wässrigen Feststoffdispersion gemäß der Lehre WO 10118961 in Verfahrensstufe c) insgesamt ≥ 0,01 und ≤ 20 Gew.-% der Gesamtmonomerenmenge und ≥ 60 Gew.-%, bevorzugt ≥ 70 Gew.-% sowie ≤ 90 Gew.-% oder ≤ 100 Gew.-% und insbesondere bevorzugt ≥ 75 und ≤ 85 Gew.-% der Gesamtmenge an radikalischem Polymerisationsinitiator zudosiert und die zudosierten ethylenisch ungesättigten Monomeren unter Polymerisationsbedingungen bis zu einem Monomerenumsatz ≥ 80 Gew.-%, bevorzugt ≥ 85 Gew.-% insbesondere bevorzugt ≥ 90 Gew.-% polymerisiert werden.

Dabei kann die Zugabe des Radikalinitiators zum wässrigen Polymerisationsmedium in Verfahrensstufe c) der WO 10118961 unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsmedium unter Bedingungen, welche nicht geeignet sind eine Polymerisationsreaktion auszulösen, beispielsweise bei tiefer Temperatur, zugegeben wird und danach im wässrigen Polymerisationsgemisch Polymerisationsbedingungen eingestellt werden.

In Verfahrensstufe c) kann die Zugabe des Radikalinitiators oder dessen Komponenten diskontinuierlich in einer oder mehreren Portionen oder kontinuierlich mit gleichbleibenden oder sich ändernden Mengenströmen erfolgen.

Die Bestimmung des Monomerenumsatzes ist dem Fachmann prinzipiell geläufig und erfolgt beispielsweise durch reaktionskalorimetrische Bestimmung.

Nachdem in Verfahrensschritt c) der WO 10118961 die Menge der eingesetzten Monomeren bis zu einem Umsatz ≥ 80 Gew.-% polymerisiert wurden (Polymerisationsstufe 1), werden im nachfolgenden Verfahrensschritt d) die gegebenenfalls verbliebene Restmenge, d.h. ≤ 90, ≤ 80, ≤ 70, ≤ 60 Gew.-% und vorteilhaft ≤ 50, ≤ 40, ≤ 30, ≤ 20 Gew.-% oder ≤ 10 Gew.-% des anorganischen Feststoffs die gegebenenfalls verbliebene Restmenge, d.h. ≤ 40, ≤ 30 oder bevorzugt ≥ 15 und ≤ 25 Gew.-% des radikalischen Polymerisationsinitiators und die verbliebene Restmenge, d.h. ≥ 80 und ≤ 99,99 Gew.-%, bevorzugt ≥ 85 und ≤ 99 Gew.-% und insbesondere bevorzugt ≥ 85 und ≤ 95 Gew.-% der ethylenisch ungesättigten Monomeren unter Polymerisationsbedingungen zudosiert und bis zu einem Monomerenumsatz ≥ 90 Gew.-% polymerisiert (Polymerisationsstufe 2). Dabei kann in den Verfahrensschritten c) und d) die Zudosierung der jeweiligen Komponenten als separate Einzelströme oder im Gemisch diskontinuierlich in einer oder mehreren Portionen oder kontinuierlich mit gleichbleibenden oder sich ändernden Mengenströmen zudosiert werden. Selbstverständlich ist es auch möglich, dass sich die Radikalinitiatoren oder ethylenisch ungesättigten Monomeren in den Verfahrensschritten c) und d) unterscheiden.

Unter Polymerisationsbedingungen sind im Rahmen dieser Schrift dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck in den Verfahrensschritten c) und d) so ausgewählt, dass der eingesetzte Radikalinitiator eine ausreichende Halbwertszeit aufweist und dabei immer genügend Startradikale zur Verfügung stehen, um die Polymerisationsreaktion auszulösen bzw. aufrechtzuerhalten.

Als Reaktionstemperatur für die radikalische wässrige Polymerisationsreaktion in Anwesenheit des feinteiligen anorganischen Feststoffes kommt generell der gesamte Bereich von 0 bis 170 °C in Betracht. Dabei werden in der Regel Temperaturen ≥ 50 und ≤ 120 °C, häufig ≥ 60 und ≤ 110 °C und oft ≥ 70 und ≤ 100 °C angewendet. Die radikalische wässrige Emulsionspolymerisation kann bei einem Druck kleiner, gleich oder größer 1 atm (absolut) durchgeführt werden, wobei die Polymerisationstemperatur 100 °C übersteigen und bis zu 170 °C betragen kann. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Polymerisation bei 1 atm (absolut) unter Inertgasatmosphäre, wie beispielsweise unter Stickstoff oder Argon durchgeführt.

Erfindungsgemäß enthält das Bindemittel neben dem Polymerisat A noch Teilchen eines Formaldehydkondensationsharzes (Teilchen B), wobei die Teilchen B einen volumenmittleren Teilchendurchmesser $D_{90}$ ≥ 1 und ≤ 100 µm, vorteilhaft ≥ 5 und ≤ 70 µm und insbesondere vorteilhaft ≥ 10 und ≤ 50 µm aufweisen, jeweils bestimmt nach der Methode der Fraunhofer-Beugung. Die Methode der Fraunhofer-Beugung ist dem Fachmann geläufig (siehe hierzu: Anhang der Norm ISO 13320; W. Batel, Einführung in die Partikelmesstechnik, VEB Deutscher Verlag für Grundstoffindustrie, Leipzig 1979, Band 1; T. Allen, Particle size measurement, Chapman and Hall, London, 1990). Im Rahmen dieser Schrift erfolgte die Bestimmung des volumenmittleren Teilchendurchmessers der Teilchen B mittels eines Malvern Mastersizer S-Gerätes (der Firma Malvern Instruments GmbH) unter Verwendung eines 833 nm-Lasers.

Unter Formaldehydkondensationsharzen sollen im Rahmen dieser Schrift die dem Fachmann geläufigen duroplastischen Kunststoffe verstanden werden, die durch Kondensationsreaktion von NH- bzw. OH-Gruppen enthaltenden Komponenten mit Formaldehyd erhalten werden. Dabei kommen als NH-Gruppen enthaltenden Komponenten im Wesentlichen Harnstoff und Melamin und als OH-Gruppen enthaltenden Komponenten Phenol und Furfurylalkohol zum Einsatz (siehe beispielsweise Compr. Polym. Sci. 5, Seiten 611 bis 665; Encycl. Polym. Sci. Eng. 1, Seiten 752 bis 784; Houben-Weyl E20/3, Seiten 1794 bis 1890; Woebecken, Duroplaste, Kunststoffhandbuch, 2. Aufl. Bd. 10, Seiten 6 bis 89, München, Hanser 1988; Angew. Makromol. Chem. 135, Seite 193ff., 1985; Kunststoffe 77, Seiten 1264 bis 1267, 1987; Kunststoffe 80, Seiten 510 bis 514, 1990; Kunststoffe 85, Seite 1635, 1995; Compr. Polym. Sci. 5, Seiten 611 bis 647; Compr. Polym. Sci. Eng. 11, Seiten 45 bis 95; Knop und Pilato, Phenolic Resins, Berlin, Springer 1985; Ullmann's Encyclopedia of industrial chemistry, Amino Resins, 2002, Wiley-VCH-Verlag). Selbstverständlich können auch Gemische der vorgenannten Komponenten mit Formaldehyd zu duroplastischen Kunststoffen kondensiert werden, wobei die entsprechenden gemischten Formaldehydkondensationsharze entstehen, wie beispielsweise Melamin-Phenol-Formaldehydharze oder melaminhaltige Harnstoffformaldehydharze. Wesentlich ist ferner, dass die Kondensationsreaktionen zu den duroplastischen Umsetzungsprodukten bei erhöhter Temperatur und gegebenenfalls in Anwesenheit der dem Fachmann geläufigen üblichen Hilfsstoffen, wie beispielsweise basische oder saure Katalysatoren oder Härtungsmittel, wie beispielsweise mehrwertige Alkoholen oder Polyaminen mit wenigstens zwei primären Aminogruppen, unter Wasserabspaltung durchgeführt werden. Selbstverständlich können die Formaldehydkondensationsharze darüber hinaus in Art

und Menge übliche weitere organische und/oder anorganische Zuschlagsstoffe enthalten, wie beispielsweise Salze, Tenside, Verarbeitungshilfsmittel, Antioxidantien, UV-Stabilisatoren, Füllstoffe, Farbstoffe sowie physikalisch und/oder chemisch wirkende Treibmittel zur Verringerung der Dichte der Formaldehydkondensationsharze.

Erfindungsgemäß vorteilhaft wird als Formaldehydkondensationsharz ein dem Fachmann geläufiges Melaminformaldehydharz, Harnstoffformaldehydharz und/oder melaminhaltiges Harnstoffformaldehydharz eingesetzt. Entsprechende teilkondensierte Vorprodukte sind im Handel erhältlich, wie beispielsweise Kaurit®-Marken der Fa. BASF SE, Prefere®-Marken der Fa. Dynea Erkner GmbH, Cascamite®-, Casco-Resin®- oder Perkins®-Marken der Fa. Momentive Performance Materials Inc. oder Sazolene®-Marken der Fa. Sadepan Chimica für Harnstoffformaldehydharze und für melaminhaltige Harnstoffformaldehydharze sowie Kauramin®-Marken der Fa. BASF SE oder Momentive®- oder Madurit®-Marken der Fa. Ineos Melamines GmbH für Melaminformaldehydharze. Durch dem Fachmann geläufige Kondensationsreaktionen werden aus den genannten teilkondensierten Vorprodukten bei erhöhter Temperatur und gegebenenfalls in Anwesenheit üblicher Hilfsstoffe, wie beispielsweise basische oder saure Katalysatoren oder Härtungsmittel, die erfindungsgemäß einsetzbaren duroplastischen Formaldehydkondensationsharze erhalten. Auch bereits auskondensierte duroplastischen Formaldehydkondensationsharze sind im Handel erhältlich, wie beispielsweise die Basotect®-Marken (geschäumte Melaminformaldehydharze) der Fa. BASF SE oder Bakelite®-Marken (Formaldehydphenolharze) der Fa. Momentive Performance Materials Inc.

Insbesondere vorteilhaft wird erfindungsgemäß ein Formaldehydkondensationsharz eingesetzt, zu dessen Herstellung Melamin und Formaldehyd in einem Molverhältnis von 1:1 bis 1:5, bevorzugt 1:1,5 bis 1:3,5 und insbesondere bevorzugt 1:2,5 bis 1:3,3 eingesetzt wurde.

In einer bevorzugten Ausführungsform werden die Formaldehydkondensationsharze in Form von geschlossen- oder offenzelligen Schäumen eingesetzt, wobei offenzellige Melaminformaldehydharzschäume (insbesondere Basotect®-Schäume) besonders bevorzugt sind. Diese Melaminformaldehydharzschäume weisen vorteilhaft eine Dichte von 3 bis 40 $kg/m^3$, bevorzugt 4 bis 30 $kg/m^3$ und besonders bevorzugt 5 bis 20 $kg/m^3$ auf.

Offenzellige Melaminformaldehydharzschäume sowie Verfahren zu ihrer Herstellung durch Erwärmen mit Heißluft, Wasserdampf oder Mikrowellenbestrahlung unter Aufschäumen und Vernetzen einer treibmittelhaltigen Lösung oder Dispersion eines Melaminformaldehyd-Vorkondensates, gefolgt von einem Trocknungs- und Temperschritt, sind dem Fachmann bekannt und beispielsweise in EP-A 74 593, EP-A 17 671, EP-A 17 672 und EP-A 37 470 beschrieben. Solche Melaminformaldehydharzschäume weisen in der Regel gute mechanische Eigenschaften, ein gutes akustisches und thermisches Isoliervermögen sowie eine geringe Brennbarkeit auf.

Die Herstellung der Teilchen B erfolgt durch eine dem Fachmann geläufige Zerkleinerung und Mahlung der Formaldehydkondensationsharze mittels einzel oder kombiniert wirkender Druck-Scher- oder Reibkräfte, beispielsweise durch Trockenmahlung mit Walzenstühlen, Walzenmühlen, Rotorprallmühlen oder Strahlmühlen bzw. durch Nassmahlung mit Nassrotormühlen, Schwingmühlen, Kugelmühlen oder Rührwerksmühlen, wobei bei der Nassmahlung Wasser oder ein inertes organisches Lösungsmittel als fluides Medium eingesetzt wird. Durch die Mahlung fallen die Teilchen B entweder pulverförmig oder suspendiert im wässrigen oder organischen (Mahl)medium an. Wesentlich ist jedoch, dass die Teilchen B im beanspruchten Teilchengrößenbereich liegen. Die nach einer Nassmahlung in wässrigem oder organischem Medium suspendierten Teilchen B können entweder direkt als Suspension oder nach Abtrennung des wässrigen oder organischen Mediums mittels üblicher Trocknungsverfahren (beispielsweise mittels Gefriertrockung oder Sprühtrocknung) in Pulverform weiterverarbeitet werden.

Erfindungsgemäß liegt das Gewichtsverhältnis von Polymerisat A zur Gesamtmenge an Teilchen B im Bereich 99,9:0,1 bis 70:30, vorteilhaft im Bereich 95: 5 bis 75:25 und besonders vorteilhaft im Bereich 90:10 bis 80:20.

Das erfindungsgemäße Bindemittel kann pulverförmig vorliegen, wobei sowohl die Teilchen B wie auch das Polymerisat A pulverförmig vorliegen. Es ist aber auch möglich, dass das Polymerisat A in einem organischen Lösungsmittel gelöst und die Teilchen B darin dispergiert sind. In diesem Fall werden die Teilchen B entweder pulverförmig oder suspendiert in einem organischen Lösungsmittel eingesetzt.

In einer bevorzugten weiteren Ausführungsform liegen sowohl die Teilchen B wie auch das Polymerisat A (mit oder ohne feinteiligen anorganischen Feststoff) in Form von Teilchen A dispergiert in einem wässrigen Medium vor. Dementsprechend wird das Polymerisat A bevorzugt in Form einer wässrigen Dispersion von Teilchen A eingesetzt. In diesem Fall weist das wässrige Bindemittel einen Feststoffgehalt ≥ 10 und ≤ 70 Gew.-%, vorteilhaft ≥ 30 und ≤ 65 Gew.-% und insbesondere vorteilhaft ≥ 40 und ≤ 60 Gew.-%, jeweils bezogen auf die Summe der Gesamtmengen an Teilchen A und Teilchen B auf. Dabei erfolgt die Herstellung eines erfindungsgemäßen wässrigen Bindemittels vorteilhaft dergestalt, dass die Teilchen A in Form einer wässrigen Dispersion vorgelegt und die Teilchen B dieser wässrigen Dispersion zugemischt werden. Die Teilchen B können sowohl pulverförmig als auch suspendiert in einem wässrigen Medium der wässrigen Polymerisat A-Dispersion zugemischt werden.

Die erfindungsgemäßen Bindemittel finden vorteilhaft Verwendung als Bindemittel bei der Herstellung von Klebstoffen, Dichtmassen, Kunstharzputzen, Papierstreichmassen, Faservliesen, flexiblen Dachbeschichtungen und Anstrichmitteln sowie bei der Sandverfestigung, als Komponente bei der Herstellung von Textil- oder Lederhilfsmitteln und Schlagzähmodifier oder zur Modifizierung von mineralischen Bindemitteln und Kunststoffen.

Insbesondere vorteilhaft werden die erfindungsgemäßen Bindemittel in Beschichtungs-, insbesondere Farbformulierungen eingesetzt, welche

| | |
|---|---|
| ≥ 2 und ≤ 99,9 Gew.-% | Polymerisat A |
| ≥ 0,1 und ≤ 30 Gew.-% | Teilchen B |
| ≥ 0 und ≤ 60 Gew.-% | Pigmente und |
| ≥ 0 und ≤ 95 Gew.-% | Füllstoffe, |

bezogen auf den Feststoffgehalt der Beschichtungsformulierung, enthalten.

Wesentlich ist, dass die Beschichtungsformulierungen keinerlei flüssiges Medium enthalten können. In einem solchen Fall sind die Beschichtungsformulierungen pulverförmig und sowohl Teilchen B wie das Polymerisat A in Form von Teilchen A sowie die Pigmente und Füllstoffe liegen pulverförmig vor. In einer weiteren erfindungsgemäßen Ausführungsform wird ein organisches Lösungsmittel als fluides Medium eingesetzt. Dabei wird das organische Lösungsmittel vorteilhaft so gewählt, dass sich das Polymerisat A vollständig darin löst, während die Teilchen B, wie auch die Pigmente und Füllstoffe darin dispergiert vorliegen. In einer weiteren erfindungsgemäß vorteilhaften Ausführungsform wird ein wässriges Medium als fluides Medium eingesetzt. In einem solchen Fall liegt sowohl das Polymerisat A in Form von Teilchen A wie auch die Teilchen B, Pigmente und Füllstoffe in im wässrigen Medium dispergierter Form vor.

Von Bedeutung ist ferner, dass zur Herstellung einer Beschichtungsformulierung die vorgenannten vorgefertigten Bindemittel eingesetzt werden können. Erfindungsgemäß ist es aber auch möglich, dass die Bindemittel erst durch separate Zugabe von Polymerisat A und Teilchen B in der Beschichtungsformulierung gebildet werden.

Als Pigmente können prinzipiell alle dem Fachmann geläufigen Weiß- bzw. Buntpigmente eingesetzt werden.

Als wichtigstes Weißpigment ist aufgrund seines hohen Brechungsindex und seines guten Deckvermögens Titandioxid in seinen verschiedenen Modifikationen zu nennen. Aber auch Zinkoxid und Zinksulfid werden als Weißpigmente eingesetzt. Dabei können diese Weißpigmente in oberflächenbeschichteter (d.h. gecoateter) bzw. unbeschichteter (d.h. nicht gecoateter) Form eingesetzt werden. Daneben werden aber auch organische Weißpigmente, wie beispielsweise nichtverfilmende styrol- und carboxylgruppenreiche hohle Polymerisatteilchen mit einer Teilchengröße von ca. 300 bis 400 nm (sogenannte Opakteilchen) verwendet.

Neben Weißpigmenten können zur Farbgestaltung dem Fachmann geläufige unterschiedlichste Buntpigmente, beispielsweise die etwas preiswerteren anorganischen Eisen-, Cadmium-, Chrom- und Bleioxide bzw. -sulfide, Bleimolybdat, Kobaltblau oder Ruß sowie die etwas teureren organischen Pigmente, beispielsweise Phthalocyanine, Azopigmente, Chinacridone, Perylene oder Carbazole eingesetzt werden.

Als Füllstoffe werden im Wesentlichen anorganische Materialien mit im Vergleich zu den Pigmenten geringerem Brechungsindex verwendet. Die pulverförmigen Füllstoffe sind dabei häufig natürlich vorkommende Mineralien, wie beispielsweise Calcit, Kreide, Dolomit, Kaolin, Talk, Glimmer, Diatomeenerde, Baryt, Quarz oder Talk/Chlorit-Verwachsungen aber auch synthetisch hergestellte anorganische Verbindungen, wie beispielsweise präzipitiertes Calciumcarbonat, kalziniertes Kaolin oder Bariumsulfat sowie pyrogene Kieselsäure. Bevorzugt wird als Füllstoff Calciumcarbonat in Form des kristallinen Calcits oder der amorphen Kreide eingesetzt.

Von Bedeutung ist ferner, dass die erfindungsgemäßen Beschichtungsformulierungen selbstverständlich zusätzlich auch dem Fachmann in Art und Menge geläufige Hilfsmittel, wie beispielsweise Dispergiermittel, Verdicker, Filmbildehilfsmittel, Neutralisationsmittel, Konservierungsmittel, Entschäumer etc. in üblichen Mengen enthalten können.

Von besonderer Bedeutung ist, dass auch wässrige Beschichtungsformulierungen für spezifische Anwendungsgebiete erfindungsgemäß umfasst sein sollen, wie insbesondere
wässrige Klarlacke, enthaltend

| | |
|---|---|
| ≥ 70 und ≤ 99,9 Gew.-% | Polymerisat A in Form von Teilchen A |
| ≥ 0,1 und ≤ 30 Gew.-% | Teilchen B |
| ≥ 0 und ≤ 5 Gew.-% | Pigmente und |
| ≥ 0 und ≤ 5 Gew.-% | Füllstoffe, |

Außenanstrichformulierungen, enthaltend

| | |
|---|---|
| ≥ 15 und ≤ 50 Gew.-% | Polymerisat A in Form von Teilchen A |
| ≥ 0,1 und ≤ 8 Gew.-% | Teilchen B |
| ≥ 20 und ≤ 50 Gew.-% | Pigmente und |
| ≥ 25 und ≤ 60 Gew.-% | Füllstoffe, |

Glanz- oder Lackfarben, enthaltend

| | |
|---|---|
| ≥ 30 und ≤ 80 Gew.-% | Polymerisat A in Form von Teilchen A |
| ≥ 0,1 und ≤ 10 Gew.-% | Teilchen B |
| ≥ 5 und ≤ 60 Gew.-% | Pigmente und |
| ≥ 0 und ≤ 30 Gew.-% | Füllstoffe, |

oder
Kunstharzputze, enthaltend

| | |
|---|---|
| ≥ 5 und ≤ 25 Gew.-% | Polymerisat A in Form von Teilchen A |
| ≥ 0,1 und ≤ 8 Gew.-% | Teilchen B |
| ≥ 1 und ≤ 10 Gew.-% | Pigmente und |
| ≥ 70 und ≤ 93,9 Gew.-% | Füllstoffe, |

bezogen auf den Feststoffgehalt der Beschichtungsformulierung, enthalten.

Durch die erfindungsgemäßen Bindemittel werden Beschichtungen zugänglich, welche auch ohne zusätzliche teure bzw. giftige fungizide bzw. algizide Wirkstoffe bei Licht-, Luft- und Feuchtigkeitseinwirkung keine oder zumindest stark reduzierte - durch Pilz- und Algenbildung verursachte - unerwünschte Verfärbungen oder Beläge aufweisen. Wesentlich ist jedoch, dass den erfindungsgemäßen Bindemitteln bzw. diese enthaltenden Beschichtungsformulierungen - falls erwünscht bzw. erforderlich - zusätzlich noch geläufige fungizide und/oder algizide Wirkstoffe in üblichen Konzentrationen zugemischt werden können. Bevorzugt wird jedoch auf eine derartige Zumischung verzichtet.

Die Erfindung soll durch nachfolgende, nicht einschränkende Beispiele erläutert werden.

Beispiele

I Herstellung der wässrigen Polymerisatdispersionen

a) Polymerisatdispersion A

In einem 4 l-Glasgefäß mit Ankerrührer, Heiz- und Kühlvorrichtungen sowie verschiedenen Zuläufen wurden bei 20 bis 25 °C (Raumtemperatur) und Atmosphärendruck (1 atm $\hat{=}$ 1,013 bar absolut)

| | |
|---|---|
| 400,0 | g entionisiertes Wasser und |
| 13,0 g | eines Polystyrolsaatlatex (Feststoffgehalt 33 Gew.-%; mit einem gewichtsmittleren Teilchendurchmesser von 28 nm) |

vorgelegt und anschließend unter Rühren (140 UpM) auf eine Innentemperatur von 90 °C aufgeheizt. Nach Erreichen dieser Temperatur wurden 10 Gew.-% der Starterlösung in einer Portion zugegeben und die erhaltene Mischung für 5 Minuten gerührt. Daran anschließend wurden gleichzeitig beginnend die Gesamtmenge der Monomerenemulsion innerhalb von 180 Minuten und die verbleibende Menge der Starterlösung innerhalb von 195 Minuten kontinuierlich und mit gleichbleibenden Mengenströmen über räumlich getrennte Zuläufe zudosiert.

Starterlösung:

| | |
|---|---|
| 8,4 g | Natriumperoxodisulfat |
| 111,6 g | entionisiertes Wasser |

Monomerenemulsion:

| | |
|---|---|
| 544,0 g | entionisiertes Wasser |
| 61,5 g | einer 32 gew.-%igen wässrigen Lösung eines Fettalkoholpolyglycolethersulfats (Emulphor® FAS 30 der Firma BASF SE) |

(fortgesetzt)

| | |
|---|---|
| 140,0 g | einer 20 gew.-%igen wässrigen Lösung eines Fettalkoholpolyethoxylats (Lutensol® AT 18 der Firma BASF SE) |
| 5,0 g | einer 15 gew.-%igen wässrigen Lösung von Natriumlaurylsulfat |
| 572,0 g | Styrol |
| 786,5 g | n-Butylacrylat, |
| 28,6 g | Acrylsäure und |
| 57,2 g | einer 50 gew.-%igen wässrigen Lösung von Acrylamid |

Daran anschließend ließ man das Reaktionsgemisch noch 15 Minuten bei vorgenannter Temperatur nachreagieren und kühlte dann das Gemisch auf 85 °C ab. Anschließend führte man dem Reaktionsgemisch bei dieser Temperatur gleichzeitig beginnend 30 g einer 10 gew.-% wässrigen Lösung von tert.-Butylhydroperoxid und 34 g einer 13 gew.-%igen wässrigen Lösung von Acetonbisulfit (1:1 Additionsprodukt aus Aceton und Natriumhydrogensulfit) über einen Zeitraum von 120 Minuten und über räumlich getrennte Zuläufe mit kontinuierlich gleichbleibenden Mengenströmen zu. Daran anschließend ließ man das Reaktionsgemisch noch 15 Minuten bei vorgenannter Temperatur nachreagieren und kühlte dann das Gemisch auf Raumtemperatur ab. Danach wurde die erhaltene wässrige Polymerisatdispersion mit einer 20 gew.-%igen wässrigen Natriumhydroxidlösung auf einen pH Wert von 7,5 eingestellt. Die erhaltenen Polymerisatdispersion hatte einen Feststoffanteil von 56,8 Gew.-%, einen zahlenmittleren Teilchendurchmesser von 130 nm und eine Glasübergangstemperatur von 7 °C.

Die Feststoffgehalte wurden generell bestimmt, indem eine definierte Menge der wässrigen Polymerisatdispersion (ca. 0,8 g) mit Hilfe des Feuchtebestimmers HR73 der Firma Mettler Toledo bei einer Temperatur von 130 °C bis zur Gewichtskonstanz getrocknet wurden (ca. 2 Stunden). Es wurden jeweils zwei Messung durchgeführt. Der jeweils angegebene Wert stellt den Mittelwert dieser Messungen dar.

Die zahlenmittleren Teilchendurchmesser der Polymerisatteilchen wurden generell durch dynamische Lichtstreuung an einer 0,005 bis 0,01 gewichtsprozentigen wässrigen Polymerisatdispersion bei 23 °C mittels eines Autosizers IIC der Fa. Malvern Instruments, England, ermittelt. Angegeben wird der mittlere Durchmesser der Kumulantenauswertung (cumulant z average) der gemessenen Autokorrelationsfunktion (ISO-Norm 13 321).

Zur Bestimmung der Glasübergangstemperatur wurden generell die wässrigen Polymerisatdispersionen mit einer Schichtdicke von ca. 1 mm auf eine Teflonfolie aufgetragen und die erhaltenen Filme für 24 Stunden bei 23 °C und 50 % rel. Luftfeuchtigkeit (Normklima) getrocknet. Die Glasübergangstemperatur wurde generell mittels eines Differential Scanning Calorimeters Q 2000 der Firma TA Instruments bestimmt. Typischerweise wurde von den erhaltenen Polymerisatfilmen eine Einwaage von ca. 8,5 mg verwendet. Die Aufheizrate betrug 20 K pro Minute. Es wurde jeweils die zweite Aufheizkurve detektiert und nach den Vorgaben der ISO-Norm 11357-2 und -3 ausgewertet.

b) Kompositpartikel-Dispersion B

In einen 2 l-Vierhalskolben, ausgerüstet mit einem Rückflusskühler, einem Thermometer, einem mechanischen Rührer sowie einer Dosiervorrichtung, wurden bei Raumtemperatur und Atmosphärendruck unter Stickstoffatmosphäre und Rühren (200 Umdrehungen pro Minute) 416,6 g Nalco® 1144 (40 gew.-% kolloidales Siliziumdioxid mit einem mittleren Teilchendurchmesser von 14 nm; Marke der Firma Nalco Chemical Company), daran anschließend 10,8 g einer 20 gew.-%igen wässrigen Lösung eines C16C18-Fettalkoholethoxylats mit durchschnittlich 18 Ethylenoxid-Einheiten (Lutensol® AT18; Marke der Firma BASF SE) und daran anschließend 315,0 g entionisiertes Wasser innerhalb von 5 Minuten zugegeben. Anschließend wurde das Vorlagengemisch auf 70 °C aufgeheizt.

Parallel stellte man als Zulauf 1 eine Monomerenmischung, bestehend aus 12,6 g Methylmethacrylat und 18,8 g n-Butylacrylat, als Zulauf 2 2,9 g (3-Methacryloxypropyl)trimethoxysilan, als Zulauf 3 eine Initiatorlösung, bestehend aus 2,1 g Natriumperoxodisulfat, 5,4 g einer 10 gew.-%igen wässrigen Lösung von Natriumhydroxid und 193,0 g entionisiertem Wasser sowie als Zulauf 4 eine Monomermischung bestehend aus 87,3 g Methylmethacrylat, 130,9 g n-Butylacrylat und 2,5 g Hydroxyethylmethacrylat, her.

Anschließend wurden dem gerührten Vorlagengemisch bei 70 °C innerhalb von 90 Minuten über eine separate Zulaufleitung 0,9 g von Zulauf 2 kontinuierlich mit gleichbleibendem Mengenstrom zugegeben. Dabei heizte man das Reaktionsgemisch 45 Minuten nach Beginn des Zulaufs 2 auf eine Reaktionstemperatur von 85 °C auf. Eine Stunde nach Beginn des Zulaufs 2 wurden dem Reaktionsgemisch innerhalb einer Zeitspanne von 120 Minuten über zwei separate Zulaufleitungen gleichzeitig beginnend, die Gesamtmenge von Zulauf 1 und 158,8 g von Zulauf 3 mit kontinuierlich gleichbleibenden Mengenströmen zudosiert. Daran anschließend wurden dem Reaktionsgemisch innerhalb einer Zeitspanne von 120 Minuten über separate Zulaufleitungen gleichzeitig beginnend, die Gesamtmenge von Zulauf 4 und die verbliebene Restmenge von Zulauf 2 sowie innerhalb einer Zeitspanne von 135 Minuten die verbliebene Restmenge

von Zulauf 3 mit kontinuierlich gleichbleibenden Mengenströmen zudosiert. Anschließend wurde die erhaltene wässrige Kompositpartikel-Dispersion eine weitere Stunde bei Reaktionstemperatur gerührt und danach auf Raumtemperatur abgekühlt.

Die so erhaltene wässrige Kompositpartikel-Dispersion war transluzent, niedrigviskos und wies einen Feststoffgehalt von 35,5 Gew-% auf, bezogen auf das Gesamtgewicht der wässrigen Kompositpartikel-Dispersion. Der zahlenmittlere Teilchendurchmesser der Kompositpartikel wurde zu 117 nm und die Glasübergangstemperatur zu 1 °C bestimmt.

Nach der Methode der Analytischen Ultrazentrifunge (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Reslution Particle Size Distribution and Density Gradient Techniques, W. Mächtle, Seiten 147 bis 175) konnten keine freien Siliziumdioxid-Teilchen nachgewiesen werden.

II Herstellung der Melaminformaldehydharzteilchen

Als Melaminformaldehydharz wurde Basotect® V 2011 der Fa. BASF SE eingesetzt.

In einer ersten Stufe wurde der Basotect-Schaum in Stücken von circa 10 bis 20 cm Durchmesser in eine Schneidmühle der Fa. Pallmann, Typ PS 3 ½, gegeben. Dort wurde der Basotect-Schaum mit einer Rotorumfangsgeschwindigkeit von ca. 10 m/s auf eine mittlere Größe von ca. 3 bis 5 mm vorzerkleinert. Die Mühle war mit einem 5 mm-Quadratlochsieb ausgestattet. Auf Grund der geringen Stoffdichte wurde das zerkleinerte Material aus der Mühle abgesaugt und danach in einem nachgeschalteten Filter (Schlauchfilter mit 5 $m^2$ Filterfläche und einem Polyesternadelfilz als Filtermaterial) abgeschieden.

Das so erhalten Mahlgut wurde in einer zweiten Stufe in eine Kugelmühle der Fa. CEMTEC, Typ DM 0607, gegeben. Die Mühle wurde diskontinuierlich betrieben und die Mahldauer so eingestellt, dass sich ein volumenmittlerer Teilchendurchmesser $D_{90}$ des ausgetragenen Mahlgutes von 43 µm ergab (2,5 Stunden). Es wurden VA-Stahlkugeln mit einem Durchmesser von 20 mm verwendet.

Bestimmung des volumenmittleren Teilchendurchmessers

Die Bestimmung des volumenmittleren Teilchendurchmessers erfolgte mittels eines Malvern Mastersizer S", in welchem 850 ml entionisiertes Wasser vorgelegt wurden. In diese Vorlage wurde langsam so viel des gemahlenen Basotect-Schaumes zugegeben, bis die für ein aussagekräftiges Ergebnis (Optimum zwischen zu wenig Streuung und Mehrfachstreuung) richtige Konzentration erreicht wurde. Diese wird automatisch vom Gerät durch Messen der "Abschattung" angezeigt, d.h. des Anteils des Laserlichtes, welcher durch die Probe abgehalten (d.h. gestreut) wird. Im vorliegenden Fall wurde die Ermittlung des volumenmittleren Teilchendurchmessers bei einem Abschattungswert von 19 % durchgeführt. Danach wurde die gebildete Suspension der Melaminformaldehydschaumteilchen durch eine Messzelle mit 2 mm Schichtdicke gepumpt und mittels eine 833 nm-Lasers nach dem Prinzip der Fraunhofer-Beugung analysiert. Der volumenmittlere Teilchendurchmesser $D_{90}$ wurde zu 43 µm bestimmt.

Zur Kontrolle wurde die wässrige Suspension der Melaminformaldehydschaumteilchen für 5 Minuten in einem Ultraschallbad behandelt und dann der volumenmittlere Teilchendurchmesser erneut gemessen. Es wurde ebenfalls ein Wert von 43 µm erhalten, wodurch eine denkbare Teilchenagglomeration ausgeschlossen werden konnte.

III Anwendungstechnische Untersuchungen

a) Herstellung der Farbformulierungen A und B

Aus den in nachfolgender Tabelle 1 angegeben Bestandteilen (Mengen in g) wurden in der von oben nach unten angegebenen Reihenfolge bei Raumtemperatur unter Rühren mit einem Scheibenrührer bei 1000 Umdrehungen pro Minute 2 Farbformulierungen basierend auf der wässrigen Polymerisatdispersion A hergestellt.

Tabelle 1 Farbformulierungen A und VA

| Farbformulierung | A | VA |
|---|---|---|
| entionisiertes Wasser | 180,0 | 180,0 |
| Verdicker[1)] | 3,0 | 3,0 |
| Base[2)] | 2,0 | 2,0 |
| Dispergiermittel[3)] | 3,0 | 3,0 |

(fortgesetzt)

| Farbformulierung | A | VA |
|---|---|---|
| Entschäumer4) | 2,0 | 2,0 |
| Filmbildehilfsmittel5) | 10,0 | 10,0 |
| Filmbildehilfsmittel6) | 10,0 | 10,0 |
| Filmbildehilfsmittel7) | 5,0 | 5,0 |
| Pigment8) | 190,0 | 190,0 |
| Füllstoff9) | 180,0 | 180,0 |
| Füllstoff10) | 50,0 | 50,0 |
| Polymerdispersion A | 320,0 | 320,0 |
| Melaminformaldehydharzpulver11) | 30,0 | - |
| Verdicker12) | 16,0 | 16,0 |
| entionisiertes Wasser | 12,0 | 12,0 |

1) Natrosol® 250 HR der Firma Ashland Aqualon GmbH
2) 25 gew.-%ige wässrige Ammoniaklösung
3) 10 gew.-%ige wässrige Natriumpolyphosphatlösung
4) Byk® 022 der Firma Byk Chemie GmbH
5) Propylenglykol der Firma BASF SE
6) Butyldiglykol der Firma BASF SE
7) Texanol® der Firma Krahn Chemie GmbH
8) Titandioxid Kronos® 2190 der Firma Kronos GmbH
9) Omyacarb® 5 GU (Calciumcarbonat) der Firma Omya GmbH
10) Finntalc® M 15 (Talk) der Firma Mondo Minerals B.V.
11) das in Abschnitt II hergestellte Basotect-Pulver
12) DSX® 3000 der Firma BASF SE (formals Cognis® DSX 3000)

Nach Zugabe der letzten Komponente rührte man noch 15 Minuten weiter und ließ anschließend die erhaltenen Farbformulierungen A und VA vor der Weiterverabeitung 1 Stunde ohne Rühren ruhen.

In entsprechender Weise wurden aus den in nachfolgender Tabelle 2 angegeben Bestandteilen (Mengen in g) in der von oben nach unten angegebenen Reihenfolge bei Raumtemperatur unter Rühren mit einem Scheibenrührer bei 1000 Umdrehugnen pro Minute 2 Farbformulierungen basierend auf der wässrigen Kompositpartikel-Dispersion B hergestellt.

Tabelle 2 Farbformulierungen B und VB

| Farbformulierung | B | VB |
|---|---|---|
| entionisiertes Wasser | 135,0 | 135,0 |
| Verdicker13) | 6,0 | 6,0 |
| Base/Filmbildehilfsmittel14) | 9,0 | 9,0 |
| Verdickter15) | 25,0 | 25,0 |
| Filmbildehilfsmittel16) | 20,0 | 20,0 |
| Entschäumer17) | 3,0 | 3,0 |
| Pigment8) | 220,0 | 220,0 |
| Füllstoff9) | 35,0 | 35,0 |
| Füllstoff18) | 30,0 | 30,0 |
| Füllstoffe10) | 25,0 | 25,0 |
| Mattierungsmittel19) | 20,0 | 20,0 |
| Kompositpartikel-Dispersion B | 449,0 | 449,0 |

(fortgesetzt)

| Farbformulierung | B | VB |
|---|---|---|
| Melaminformaldehydharzpulver[11)] | 30,0 | - |

13) Tylose® MH30000YP2 der Firma ShinEtsu Tylose GmbH
14) 2-Amino-2-methyl-1-propanol-1 der Firma Angus Chemical Company
15) Tego Dispers® 740W der Firma Evonik Tego GmbH
16) Dowanol® DPnB der Firma Dow Chemical Germany GmbH
17) Foammaster®50 der Firma BASF SE
18) Omyacarb® 10 GU (Calciumcarbonat) der Firma Omya GmbH
19) Optimatt® 2550 der Firma Imerys Performance Minerals Ltd.

Nach Zugabe der letzten Komponente rührte man noch 15 Minuten weiter und ließ anschließend die erhaltenen Farbformulierungen B und VB vor der Weiterverabeitung 1 Stunde ohne Rühren ruhen.

b) Herstellung der beschichteten Substrate

Die vorgenannten Farbformulierungen A, B, VA und VB wurden derart mit einer Farbrolle auf Faserzementplatten der Größe 20 x 30 cm aufgetragen, dass das Flächengewicht (nass) jeweils 300 $g/m^2$ betrug. Anschließend wurden die so erhaltenen Beschichtungen für 7 Tage im Klimaraum bei 50 % relativer Luftfeuchtigkeit und 23 °C getrocknet.

In analoger Weise wurden Faserzementplatten mit den am Markt erhältlichen Farben Maxicryl®, der Fa. Sto AG (Vergleichsfarbe 1), Photosan®, der Fa. Sto AG (Vergleichsfarbe 2) und Lotusan®, der Fa. Sto AG (Vergleichsfarbe 3) behandelt. Mit den vorgenannten Farbformulierungen und den Vergleichsfarben wurden jeweils 5 Faserzementplatten wie beschrieben beschichtet.

c) Witterungsversuche

Die unter b) erhaltenen Beschichtungen auf Faserzementplatten wurden für 12 Monate einer Freibewitterung unterzogen. Dabei wurden die beschichteten Faserzementplatten mit der Beschichtung nach oben derart ausgerichtet, dass die Neigung zur Senkrechten 60 ° betrug (0 ° bedeutet senkrecht, 90 ° bedeutet horizontal zur Erdoberfläche). Insgesamt wurden die Beschichtungen nach Norden ausgerichtet. Als Standort für die Freibewitterung wurde eine von Hecken umrandete Wiese gewählt. Nach 12 Monaten wurden die Beschichtungen nach dem Gesamtbewuchs (Algen und Pilze) vergleichend beurteilt. Zur Beurteilung wurde eine Notenskala von 0 bis 10 herangezogen, wobei die Note 0 für einen massiven Befall und die Note 10 für keinerlei Befall durch Algen und Pilze steht. Die in nachfolgender Tabelle 3 angegebenen Ergebnisse stellen die Mittelwerte der jeweiligen 5 Beurteilungen dar.

Tabelle 3 Ergebnisse der Freibewitterung

| Beschichtung | Note für den Umfang des Befalls |
|---|---|
| Farbformulierung A | 9 |
| Farbformulierung VA | 3 |
| Farbformulierung B | 9 |
| Farbformulierung VB | 4 |
| Vergleichsfarbe 1 | 6 |
| Vergleichsfarbe 2 | 8 |
| Vergleichsfarbe 3 | 10 |

Aus den Ergebnissen ist klar ersichtlich, dass die mit dem erfindungsgemäßen Bindemittel hergestellten Farbformulierungen eine sehr gute Resistenz gegen Algen- und Pilzbefall aufweisen. Lediglich die "mit erhöht angepasster Filmkonservierung gegen Algen- und/oder Pilzbefall" ausgerüstete Vergleichsfarbe 3 schnitt etwas besser ab.

## Patentansprüche

1. Bindemittel, enthaltend ein Polymerisat A und Teilchen eines duroplastischen Formaldehydkondensationsharzes

(Teilchen B), wobei

a) das Polymerisat A eine Glasübergangstemperatur im Bereich ≥ -60 und ≤ 70 °C aufweist, und
b) die Teilchen B einen volumenmittleren Teilchendurchmesser $D_{90}$ ≥ 1 und ≤ 100 µm, bestimmt nach der Methode der Fraunhofer-Beugung, aufweisen.

**2.** Bindemittel nach Anspruch 1, wobei das Polymerisat A eine Glasübergangstemperatur im Bereich ≥ -40 und ≤ 50 °C aufweist.

**3.** Bindemittel nach einem der Ansprüche 1 oder 2, wobei das Polymerisat A in Form von Teilchen mit einem mittleren Teilchendurchmesser ≥ 10 und ≤ 1000 nm (Teilchen A), bestimmt nach der Methode der quasielastischen Lichtstreuung, vorliegen.

**4.** Bindemittel nach Anspruch 3, wobei das Polymerisat A zusätzlich noch einen feinteiligen anorganischen Feststoff mit einem mittleren Teilchendurchmesser > 0 und ≤ 100 nm, ermittelt nach der Methode der Analytischen Ultrazentrifuge, enthält (Kompositpartikel).

**5.** Bindemittel nach Anspruch 4, wobei der feinteilige anorganische Feststoff eine siliziumhaltige Verbindung ist.

**6.** Bindemittel nach einem der Ansprüche 4 oder 5, wobei der feinteilige anorganische Feststoff eine pyrogene und/oder kolloidale Kieselsäure, ein Siliziumdioxid-Sol und/oder ein Schichtsilikat ist.

**7.** Bindemittel nach einem der Ansprüche 4 bis 6, wobei der feinteilige anorganische Feststoff einen mittleren Teilchendurchmesser ≥ 5 und ≤ 50 nm aufweist.

**8.** Bindemittel nach einem der Ansprüche 4 bis 7, wobei das Gewichtsverhältnis von Polymerisat A zu feinteiligem anorganischem Feststoff 95:5 bis 40:60 beträgt.

**9.** Bindemittel nach einem der Ansprüche 1 bis 8, wobei das duroplastische Formaldehydkondensationsharz ein Melaminformaldehydharz, ein Harnstoffformaldehydharz und/oder ein melaminhaltiges Harnstoffformaldehydharz ist.

**10.** Bindemittel einem der Ansprüche 1 bis 9, wobei das duroplastische Formaldehydkondensationsharz ein Melaminformaldehydharz ist, zu dessen Herstellung Melamin und Formaldehyd in einem Molverhältnis von 1:1 bis 1:5 eingesetzt wurde.

**11.** Bindemittel nach einem der Ansprüche 1 bis 10, wobei die Teilchen B einen volumenmittleren Teilchendurchmesser $D_{90}$ ≥ 5 und ≤ 70 µm aufweisen.

**12.** Bindemittel nach einem der Ansprüche 1 bis 11, wobei das Gewichtsverhältnis von Polymerisat A zur Gesamtmenge an Teilchen B 99,9:0,1 bis 70:30 beträgt.

**13.** Bindemittel nach einem der Ansprüche 3 bis 12, wobei die Teilchen A in Form einer wässrigen Dispersion eingesetzt werden.

**14.** Bindemittel nach Anspruch 13, wobei der Feststoffgehalt ≥ 10 und ≤ 70 Gew.-%, bezogen auf die Summe der Gesamtmengen an Teilchen A und Teilchen B beträgt.

**15.** Verwendung eines Bindemittels gemäß einem der Ansprüche 1 bis 14 als Bindemittel bei der Herstellung von Klebstoffen, Dichtmassen, Kunstharzputzen, Papierstreichmassen, Faservliesen, flexiblen Dachbeschichtungen und Anstrichmitteln sowie bei der Sandverfestigung, als Komponente bei der Herstellung von Textil- oder Lederhilfsmitteln und Schlagzähmodifier oder zur Modifizierung von mineralischen Bindemitteln und Kunststoffen.

**16.** Verfahren zur Herstellung eines Bindemittels gemäß einem der Ansprüche 13 und 14, **dadurch gekennzeichnet, dass** die Teilchen A in Form einer wässrigen Dispersion vorgelegt und die Teilchen B dieser wässrigen Dispersion zugemischt werden.

**17.** Beschichtungsformulierung enthaltend

| | |
|---|---|
| ≥ 2 und ≤ 99,9 Gew.-% | Polymerisat A, welches über eine Glasübergangstemperatur im Bereich ≥ -60 und ≤ 70 °C aufweist |
| ≥ 0,1 und ≤ 30 Gew.-% | Teilchen B eines duroplastischen Formaldehydkondensationsharzes, welche einen volumenmittleren Teilchendurchmesser $D_{90}$ ≥ 1 und ≤ 100 µm, bestimmt nach der Methode der Fraunhofer-Beugung, aufweisen |
| ≥ 0 und ≤ 60 Gew.-% | Pigmente und |
| ≥ 0 und ≤ 95 Gew.-% | Füllstoffe, |

bezogen auf den Feststoffgehalt der Beschichtungsformulierung.

## Claims

1. A binder comprising a polymer A and particles of a thermoset formaldehyde condensation resin (particles B), where

   a) the polymer A has a glass transition temperature in the range ≥ -60 and ≤ 70°C, and
   b) the particles B have a volume-average particle diameter $D_{90}$ ≥ 1 and ≤ 100 µm, determined by the method of Fraunhofer diffraction.

2. The binder according to claim 1, where the polymer A has a glass transition temperature in the range ≥ -40 and ≤ 50°C.

3. The binder according to either of claims 1 and 2, where the polymer A is in the form of particles having an average particle diameter ≥ 10 and ≤ 1000 nm (particles A), determined by the method of quasielastic light scattering.

4. The binder according to claim 3, where the polymer A further comprises a finely divided inorganic solid having an average particle diameter > 0 and ≤ 100 nm, determined by the method of the analytical ultracentrifuge (composite particles).

5. The binder according to claim 4, where the finely divided inorganic solid is a silicon-containing compound.

6. The binder according to either of claims 4 and 5, where the finely divided inorganic solid is a fumed and/or colloidal silica, a silicon dioxide sol and/or a phyllosilicate.

7. The binder according to any of claims 4 to 6, where the finely divided inorganic solid has an average particle diameter ≥ 5 and ≤ 50 nm.

8. The binder according to any of claims 4 to 7, where the weight ratio of polymer A to finely divided inorganic solid is 95:5 to 40:60.

9. The binder according to any of claims 1 to 8, where the thermoset formaldehyde condensation resin is a melamine-formaldehyde resin, a urea-formaldehyde resin and/or a melamine-containing urea-formaldehyde resin.

10. The binder according to any of claims 1 to 9, where the thermoset formaldehyde condensation resin is a melamine-formaldehyde resin prepared using melamine and formaldehyde in a molar ratio of 1:1 to 1:5.

11. The binder according to any of claims 1 to 10, where the particles B have a volume-average particle diameter $D_{90}$ ≥ 5 and ≤ 70 µm.

12. The binder according to any of claims 1 to 11 where the weight ratio of polymer A to the total amount of particles B is 99.9:0.1 to 70:30.

13. The binder according to any of claims 3 to 12, where the particles A are used in the form of an aqueous dispersion.

14. The binder according to claim 13, where the solids content is ≥ 10% and ≤ 70% by weight, based on the sum of the

total amounts of particles A and particles B.

**15.** The use of a binder according to any of claims 1 to 14 as a binder in the production of adhesives, sealants, synthetic resin renders, paper coating slips, fiber nonwovens, flexible roof coatings, and paints, and also in sand consolidation, as a component in the production of textile assistants or leather assistants and impact modifiers, or for modifying mineral binders and plastics.

**16.** A method for producing a binder according to either of claims 13 and 14, wherein the particles A are introduced in the form of an aqueous dispersion, and the particles B are admixed to this aqueous dispersion.

**17.** A coating formulation comprising
≥ 2% and ≤ 99.9% by weight of polymer A which has a glass transition temperature in the range ≥ -60 and ≤ 70°C,
≥ 0.1% and ≤ 30% by weight of particles B of a thermoset formaldehyde condensation resin, which particles have a volume-average particle diameter $D_{90}$ ≥ 1 and ≤ 100 µm, determined by the method of Fraunhofer diffraction,
≥ 0% and ≤ 60% by weight of pigments, and
≥ 0% and ≤ 95% by weight of fillers,
based on the solids content of the coating formulation.

## Revendications

**1.** Liant, contenant un polymère A et des particules d'une résine de condensation de formaldéhyde duroplastique (particules B), dans lequel

a) le polymère A présente une température de transition vitreuse dans la plage ≥ -60 et ≤ 70 °C, et
b) les particules B présentent un diamètre de particule moyen en volume $D_{90}$ ≥ 1 et ≤ 100 µm, déterminé par la méthode de diffraction de Fraunhofer.

**2.** Liant selon la revendication 1, dans lequel le polymère A présente une température de transition vitreuse dans la plage ≥ -40 et ≤ 50 °C.

**3.** Liant selon l'une quelconque des revendications 1 ou 2, dans lequel le polymère A se présente sous la forme de particules ayant un diamètre de particule moyen ≥ 10 et ≤ 1 000 nm (particules A), déterminé par la méthode de diffusion de lumière quasi-élastique.

**4.** Liant selon la revendication 3, dans lequel le polymère A contient en outre encore un solide inorganique finement divisé ayant un diamètre de particule moyen > 0 et ≤ 100 nm, déterminé par la méthode de l'ultracentrifugation analytique (particules composites).

**5.** Liant selon la revendication 4, dans lequel le solide inorganique finement divisé est un composé contenant du silicium.

**6.** Liant selon l'une quelconque des revendications 4 ou 5, dans lequel le solide inorganique finement divisé est une silice pyrogénée et/ou colloïdale, un sol de dioxyde de silicium et/ou un silicate feuilleté.

**7.** Liant selon l'une quelconque des revendications 4 à 6, dans lequel le solide inorganique finement divisé présente un diamètre de particule moyen ≥ 5 et ≥ 50 nm.

**8.** Liant selon l'une quelconque des revendications 4 à 7, dans lequel le rapport en poids entre le polymère A et le solide inorganique finement divisé est de 95:5 à 40:60.

**9.** Liant selon l'une quelconque des revendications 1 à 8, dans lequel la résine de condensation de formaldéhyde duroplastique est une résine de mélamine-formaldéhyde, une résine d'urée-formaldéhyde et/ou une résine d'urée-formaldéhyde contenant de la mélamine.

**10.** Liant selon l'une quelconque des revendications 1 à 9, dans lequel la résine de condensation de formaldéhyde duroplastique est une résine de mélamineformaldéhyde, pour la fabrication de laquelle de la mélamine et du formaldéhyde ont été utilisés en un rapport molaire de 1:1 à 1:5.

**11.** Liant selon l'une quelconque des revendications 1 à 10, dans lequel les particules B présentent un diamètre de particule moyen en volume $D_{90} \geq 5$ et $\leq 70$ µm.

**12.** Liant selon l'une quelconque des revendications 1 à 11, dans lequel le rapport en poids entre le polymère A et la quantité totale de particules B est de 99,9:0,1 à 70:30.

**13.** Liant selon l'une quelconque des revendications 3 à 12, dans lequel les particules A sont utilisées sous la forme d'une dispersion aqueuse.

**14.** Liant selon la revendication 13, dans lequel la teneur en solides est ≥ 10 et ≤ 70 % en poids, par rapport à la somme des quantités totales de particules A et de particules B.

**15.** Utilisation d'un liant selon l'une quelconque des revendications 1 à 14 en tant que liant lors de la fabrication d'adhésifs, de matériaux d'étanchéité, d'enduits à base de résines synthétiques, de laits de couchage pour papiers, de non-tissés fibreux, de revêtements de toit flexibles et de peintures, ainsi que lors de la consolidation de sable, en tant que composant lors de la fabrication d'adjuvants pour textiles ou cuir, et de modificateurs de la résistance aux impacts, ou pour la modification de liants minéraux et de plastiques.

**16.** Procédé de fabrication d'un liant selon l'une quelconque des revendications 13 et 14, **caractérisé en ce que** les particules A sont chargées initialement sous la forme d'une dispersion aqueuse, et les particules B sont incorporées dans cette dispersion aqueuse.

**17.** Formulation de revêtement, contenant :

≥ 2 et ≤ 99,9 % en poids de polymère A, qui présente une température de transition vitreuse dans la plage ≥ -60 ec 70 °C,
≥ 0,1 et ≤ 30 % en poids de particules B d'une résine de condensation de formaldéhyde duroplastique, qui présentent un diamètre de particule moyen en volume $D_{90} \geq 1$ et $\leq 100$ µm, déterminé par la méthode de diffraction de Fraunhofer,
≥ 0 et ≤ 60 % en poids de pigments et
≥ 0 et ≤ 95 % en poids de charges,
par rapport à la teneur en solides de la formulation de revêtement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5304567 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- US 4269749 A
- EP 40419 B
- EP 567812 A
- EP 614922 A
- DE 4213965 A
- US 3360599 A
- US 3238173 A
- US 3726824 A
- US 3734686 A
- US 6207756 A
- US 3544500 A
- US 4421660 A
- US 4608401 A
- US 4981882 A
- EP 104498 A
- EP 505230 A
- EP 572128 A
- GB 2227739 A
- WO 0118081 A
- WO 0129106 A
- WO 03000760 A
- WO 10118961 A
- EP 74593 A
- EP 17671 A
- EP 17672 A
- EP 37470 A


### In der Beschreibung aufgeführte Nicht-Patentliteratur


- Unsere Zukunft, unser Lack. Berufsgruppe Lackindustrie, 2008, 24-33
- **M. BURGHARDT et al.** Biozide in Gebäudefassaden - ökotoxikologische Effekte, Auswaschungen und Belastungsabschätzung für Gewässer. *Umweltwissenschaften und Schadstoffforschung,* 2009, vol. 21 (1), 36-47
- Auswaschbarkeit von Biozidwirkstoffen aus Fassadenbeschichtungen. **U. SCHOKNECHT.** Biozide und funktionale Baustoffoberflächen. Fraunhofer-IRB Verlage, 2008, vol. 8, 110ff
- *Emulsionspolymerisation in Encyclopedia of Polymer Science and Engineering,* 1987, vol. 8, 659 ff
- **D.C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- Methoden der organischen Chemie. **HOUBEN-WEYL.** Makromolekulare Stoffe. Georg-Thieme-Verlag, 1961, vol. XIV/1, 411-420
- Weitere geeignete Emulgatoren finden sich in Houben-Weyl, Methoden der organischen Chemie. Makromolekulare Stoffe. Georg-Thieme-Verlag, 1961, vol. XIV/1, 192-208
- Polymerhandbook. J. Brandrup und E.H. Immergut. John Weley & Sons, 1989, vol. II, 133-141
- Encyclopedia of Polymer Science and Technology. John Wiley & Sons Inc, 1966, vol. 5, 847
- Ullmann's Encyclopedia of Industrial Chemistry. Verlag Chemie, 1992, 169
- **ZOSEL.** *Farbe und Lack,* 1976, vol. 82, 125-134
- **T.G. FOX.** *Bull. Am. Phys. Soc.,* 1956, vol. 11 (1), 123
- Ullmann's Encyclopädie der technischen Chemie. Verlag Chemie, 1980, vol. 19, 18
- **J. BRANDRUP ; E.H. IMMERGUT.** Polymer Handbook. J. Wiley
- POLYMER HANDBOOK. J. Wiley, 1966
- POLYMER HANDBOOK. J. Wiley, 1975

- Ullmann's Cncyclopedia of Industrial Chemistry. Verlag Chemie, 1989, 169
- Am. Chem. Soc. **ECKERSLEY et al.** Div. Polymer Chemistry. 1977, vol. 38, 2
- Analysis of Polymer Dispersions with an Eight-Cell-AUC-Multiplexer: High Resolution Particle Size Distribution and Density Gradient Techniques. **S.E. HARDING et al.** Analytical Ultracentrifugation in Biochemistry and Polymer Science. Royal Society of Chemistry, 1992, 147-175
- **LONG et al.** *Tianjin Daxue Xuebao,* 1991, vol. 4, 10-15
- **BOURGEAT-LAMI et al.** *Angewandte Makromolekulare Chemie,* 1996, vol. 242, 105-122
- **PAULKE et al.** Synthesis Studies of Paramagnetic Polystyrene Latex Particles in Scientific and Clinical Applications of Magnetic Carriers. Plenum Press, 1997, 69-76
- **ARMES et al.** *Advanced Materials,* 1999, vol. 11 (5), 408-410
- **R.J. HUNTER.** Introduction to modern Colloid Science. Oxford University Press, 1993, 241-248
- Electrical Phenomena at Interfaces. **K. OKA ; K. FURUSAWA.** Surfactant Science Series. Marcel Dekker, 1998, vol. 76, 151-232
- **WARE ; W.H. FLYGARE.** *Chem. Phys. Lett.,* 1971, vol. 12, 81-85
- **E. MATIJEVIC.** *Chem. Mater.,* 1993, vol. 5, 412-426
- Ullmann's Encyclopedia of Industrial Chemistry. Verlag Chemie, 1992, vol. A 23, 583-660
- **D.F. EVANS.** H. Wennerström in The Colloidal Domain. Verlag Chemie, 1994, 363-405
- R.J. Hunter in Foundations of Colloid Science. Clarendon Press, 1991, vol. I, 10-17
- **W. BATEL.** Einführung in die Partikelmesstechnik. VEB Deutscher Verlag für Grundstoffindustrie, 1979, vol. 1
- **T. ALLEN.** Particle size measurement. Chapman and Hall, 1990
- *Compr. Polym. Sci.,* vol. 5, 611-665
- *Encycl. Polym. Sci. Eng.,* vol. 1, 752-784
- *Houben-Weyl,* vol. E20/3, 1794-1890
- **WOEBECKEN.** Duroplaste, Kunststoffhandbuch. München, Hanser, 1988, vol. 10, 6-89
- *Angew. Makromol. Chem.,* 1985, vol. 135, 193ff
- *Kunststoffe,* 1987, vol. 77, 1264-1267
- *Kunststoffe,* 1990, vol. 80, 510-514
- *Kunststoffe,* 1995, vol. 85, 1635
- *Compr. Polym. Sci.,* vol. 5
- *Compr. Polym. Sci. Eng.,* vol. 11, 45-95
- **KNOP ; PILATO.** Phenolic Resins, Berlin. Springer, 1985
- Ullmann's Encyclopedia of industrial chemistry. Amino Resins. Wiley-VCH-Verlag, 2002
- Analytical Ultracentrifugation in Biochemistry and Polymer Science. **S.E. HARDING et al.** Royal Society of Chemistry. 1992, 147-175